# EUROPÄISCHE PATENTSCHRIFT

(11) **EP 1 373 765 B1**
(45) Veröffentlichungstag und Bekanntmachung des Hinweises auf die Patenterteilung: **06.10.2004**
(21) Anmeldenummer: 02704748.9
(22) Anmeldetag: 13.03.2002
(51) Int. Cl.: F16H 61/30

(54) **PNEUMATISCHE SCHALTVORRICHTUNG FÜR EIN SCHALTGETRIEBE**
PNEUMATIC SHIFTGEAR DEVICE FOR A GEARBOX
DISPOSITIF DE COMMUTATION PNEUMATIQUE POUR BOITE DE VITESSES

(30) Priorität: 19.03.2001 DE 10113201
(43) Veröffentlichungstag der Anmeldung: 02.01.2004
(73) Patentinhaber: KNORR-BREMSE SYSTEME FÜR NUTZFAHRZEUGE GMBH, 80809 München (DE)
(72) Erfinder: PIZZOLATO, Paolo-Salvatore, 86899 Landsberg/Lech (DE); DOTTI, Giulio, I-20121 Milano (IT)
(86) Internationale Anmeldenummer: PCT/EP2002/002717
(87) Internationale Veröffentlichungsnummer: WO 2002/075181

(56) Entgegenhaltungen:
- EP-A- 0 614 030
- DE-C- 880 242
- US-A- 2 743 704
- US-A- 3 472 282
- US-A- 3 601 153

## Beschreibung

Die Erfindung betrifft ein Schaltgetriebe für ein Fahrzeug, insbesondere für ein Nutzfahrzeug, mit den Merkmalen des Oberbegriffs des Anspruchs 1.

Die üblichen Schaltgetriebe werden manuell durch die Bewegung eines Schalthebels gesteuert, der in der Kabine neben dem Fahrersitz angeordnet ist. Hierbei sind insbesondere bei Lastkraftwägen zur Betätigung des Getriebes hohe Kräfte erforderlich. Deshalb wird der Schalthebel in der Regel sehr groß gestaltet, um den manuellen Kraftaufwand zu reduzieren, und damit er stabil genug ist, um den Betätigungskräften standzuhalten.

Aufgrund dieser Eigenschaften ist der Schalthebel daher unhandlich und sperrig, zumal der verfügbare Raum in einer modernen Führerkabine begrenzt und wertvoll ist. Überdies können Vibrationen am Schalthebel auftreten, welche das Schaltgetriebe beschädigen und insbesondere dazu führen können, dass der Schalthebel aus einem gewählten Gang herausspringt.

Ein weiterer zu betrachtender Aspekt bei Schaltgetrieben in Nutzfahrzeugen betrifft den Abstand des Schalthebels vom Getriebe. Dieser erfordert die Anwendung eines komplexen mechanischen Übertragungssystems. Darüber hinaus ist die Bereitstellung eines Entkopplungssystems aus einem Teleskopkolben und einer hydraulisch gesteuerten Kopplungseinrichtung notwendig, um ein Aufkippen der Führerkabine zu ermöglichen.

Zur Verbesserung derartiger Schaltgetriebe wurden daher bereits einige Versuche unternommen. So wurde ein rein elektronisch gesteuertes System für die Steuerung des Schaltgetriebes vorgeschlagen. Die Kosten hierfür haben sich jedoch als derart hoch erwiesen, dass sich eine derartige Bauweise in der Praxis nicht durchgesetzt hat.

Ferner wurde ein kombiniertes elektronisches und pneumatisches System bzw. ein kombiniertes elektrisches und hydraulisches System vorgeschlagen, welches mittels Schalteinrichtungen, Elektromagnetventilen und Stellgliedern arbeitet. Derartige Systeme wurden in der Praxis jedoch nicht angenommen, da sie nicht dazu geeignet sind, dass der Bediener die Last und die Schalthebelposition erfassen kann. Zudem kehrt der Schalthebel bei derartigen Bauweisen nicht selbsttätig auf eine Grundposition zurück. Wenn der Fahrer des Nutzfahrzeugs diese Bedienaspekte jedoch nicht erfassen kann, ist es möglich, dass das Schaltgetriebe auch in einem nicht synchronisierten Zustand in einen gewünschten Gang gedrängt werden kann und das Getriebe dabei zerstört wird. Auch diese Bauweisen haben sich daher in der Praxis nicht durchgesetzt.

Zudem sind hydrostatische Übertragungssysteme bekannt, die einen Schalthebel aufweisen, der vier über Kreuz angeordnete Hauptzylinder betätigt. Diese werden durch einen Ölbehälter versorgt und wirken auf zwei doppelt wirkende Stellglieder ein, die am Getriebekasten angeordnet sind. Dieses System ist jedoch nicht geeignet, um eine Verringerung der manuellen Anstrengungen bei der Steuerung des Getriebes herbeizuführen. Daher lassen sich mit dieser Bauweise auch nicht die Platzverhältnisse in der Fahrerkabine verbessern, da hier keine Verringerung der Abmessungen des Schalthebels möglich ist. Darüber hinaus ist die Verstärkung der Stellgliederhübe entsprechend der Bewegungen des Schalthebels beschränkt. Ein weiterer Nachteil dieser Bauweise liegt darin, dass sie angesichts der verwendeten hydraulischen Flüssigkeit und der hierfür erforderlichen Dichtheit sowie der Versorgungsprobleme relativ komplex ist. Die Vorrichtung ist daher auch kostenträchtig, zumal bereits die erforderliche Verrohrung aufwendig und teuer ist. Aus DE 07 04 328 C ist ein Schaltgetriebe bekannt, bei dem eine Schalthebelstellung in ein pneumatisches Signal umgesetz wird, und das Getriebe pneumatisch geschaltet wird. Nachteilig an diesem Getriebe ist, dass sich auf Grund des Getriebeaufbaus nur 4 Vorwärtsgänge realisieren lassen.

US-A-3 601 153 offenbart ein Schaltgetriebe für ein Fahrzeug mit einer Schalthebeleinrichtung, einer Übertragungseinrichtung, einer Schalteinrichtung und einem Getriebe, wobei die Übertragungseinrichtung versehen ist mit einem Wahlverteiler, der eine mechanische Einwirkung entsprechend der Stellung eines Schalthebels der Schalthebeleinrichtung in ein Signal umwandelt, und einem doppelt wirkenden Stellglied, welches das Signal des Wahlverteilers in eine mechanische Ansteuerung der Schalteinrichtung übersetzt und dadurch die Schalteinrichtung im Ansprechen auf die Schalthebeleinrichtung betätigt, und wobei die Schalteinrichtung einen dementsprechenden Getriebebreich ansteuert.

Des weiteren ist die Übertragungseinrichtung versehen mit einem Eingriffsverteiler, der eine mechanische Einwirkung entsprechend der Stellung eines Schalthebels der Schalthebeleinrichtung in ein Signal umwandelt, und einem weiteren doppelt wirkenden Stellglied, welches das Signal des Eingriffsverteilers in eine mechanische Ansteuerung der Schalteinrichtung übersetzt und dadurch die Schalteinrichtung im Ansprechen auf die Schalthebeleinrichtung betätigt, und wobei die Schalteinrichtung einen dementsprechenden Getriebebreich ansteuert.

Der Wahlverteiler ist versehen mit einem Gehäuse, zwei im Gehäuse geführte Schieber und zwei in den Schiebern verschiebbar geführte Steuerkolben, die federnd gegen Ventilsitze an den Schiebern vorgespannt sind, wobei jeder Schieber zusammen mit einem Steuerkolben und dem Gehäuse einen Druckraum ausbildet.

Der Eingriffsverteiler ist versehen mit einem Gehäuse, zwei im Gehäuse geführte Schieber und zwei in den Schiebern verschiebbar geführte Steuerkolben, die federnd gegen Ventilsitze an den Schiebern vorgespannt sind, wobei jeder Schieber zusammen mit einem Steuerkolben und dem Gehäuse einen Druckraum ausbildet.

Der Erfindung liegt daher die Aufgabe zugrunde, ein Schaltgetriebe, einen Wahlverteiler und einen Eingriffsverteiler für ein Fahrzeug, insbesondere für ein Nutzfahrzeug, bereitzustellen, welche derart verbessert sind, dass die oben genannten Probleme beseitigt werden und sich insbesondere ein verbesserter und zuverlässiger Bedienkomfort einstellt.

Diese Aufgabe wird durch ein Schaltgetriebe mit den Merkmalen der Ansprüche 1 oder 2, durch einen Wahlverteiler gemäß Anspruch 3 oder durch einen Eingriffsverteiler gemäß Anspruch 4 gelöst. So ist es im Gegensatz zum Stand der Technik erstmals vorgesehen, dass die Übertragungseinrichtung als pneumatische Einrichtung ausgebildet ist.

Damit lassen sich insbesondere die nachfolgenden Vorteile erzielen:

So ist eine wesentliche Reduzierung der manuellen Anstrengung bei der Steuerung des Getriebes durch das erfindungsgemäße pneumatisch unterstützte System möglich. Ferner ist eine Erfassung der Last, auch wenn sie nur gering ist, sowie der Schalthebellage weiterhin möglich. Die pneumatische Übertragungseinrichtung erlaubt zudem eine unbegrenzte Verstärkung der Stellgliederhübe ungeachtet der Verschiebungen des Schalthebels, auch wenn diese weiter auf dessen Positionen bezogen sind. Wenn das Getriebe im Leerlauf ist, kann der Schalthebel zudem selbsttätig in seine Grundstellung zurückkehren. Bei einem Zwei- oder Dreigruppengetriebe kann der Schalthebel dementsprechend zur zugeordneten Grundstellung zurückkehren.

Durch die Erfindung ist es ferner möglich, die Dimensionen des Schalthebels zu reduzieren, was den frei verfügbaren Raum in der Führerkabine erweitert. Dies beruht insbesondere darauf, dass die Betätigungskräfte und der Hebelweg reduziert werden können. Gleichzeitig können die sehr komplexen und massiven mechanischen Übertragungssysteme, die hydraulische Entkopplungsvorrichtung und ihre manuell betätigte Pumpe beseitigt werden, was zu einer wesentlichen Verringerung der Kosten führt.

Das erfindungsgemäße Schaltgetriebe zeichnet sich dabei durch eine einfache Bauweise mit im wesentlichen standardisierten Bauelementen aus, wodurch es mit geringen Kosten realisiert werden kann. Ferner lässt sich so das Vibrationsproblem des Schalthebels im wesentlichen lösen, da der Schalthebel erfindungsgemäß lediglich noch eine geringe Masse aufweisen muss und die mechanische Übertragung entfällt. So kann zuverlässig vermieden werden, dass das Getriebe in unerwünschter Weise außer Eingriff gelangt. Ein weiterer Vorteil der Erfindung liegt darin, dass sich hierdurch das Gewicht des Systems wesentlich reduzieren lässt.

Die Erfindung wird nachfolgend in Ausführungsbeispielen anhand der Figuren der Zeichnung näher erläutert. Es zeigt:
- Fig. 1: in schematischer Darstellung Teilmerkmale eines erfindungsgemäßen Schaltgetriebes und insbesondere dessen Schalteinrichtung;
- Fig. 2a: eine Seitenansicht eines Schalthebels und einer Übertragungseinrichtung des erfindungsgemäßen Schaltgetriebes;
- Fig. 2b: eine schematische Schnittdarstellung der Übertragungseinrichtung;
- Fig. 3a: die Verteilergruppe der Übertragungseinrichtung in einem vergrößerten Maßstab;
- Fig. 3b: das Schaltventil im Detail;
- Fig. 3c: das Gleitkreuz im Detail;
- Fig. 4a: eine schematische Darstellung der Eingriffssteuergruppe der Übertragungseinrichtung in einer neutralen Stellung;
- Fig. 4b: die Eingriffssteuergruppe gemäß Fig. 4a während der Schaltbetätigung;
- Fig. 4c: die Eingriffssteuergruppe gemäß Fig. 4a in weiterem Zuge des Schaltvorgangs;
- Fig. 4d: die Eingriffssteuergruppe gemäß Fig. 4a bei eingekoppeltem Gang;
- Fig. 4e: die Eingriffssteuergruppe gemäß Fig. 4a beim Auskoppelvorgang;
- Fig. 5a: die Wahlsteuergruppe der Übertragungseinrichtung in der neutralen Stellung (dritter bzw. vierter Gang);
- Fig. 5b: die Wahlsteuergruppe gemäß Fig. 5a bei Wahl einer anderen Schaltschiene (erster bzw. zweiter Gang);
- Fig. 5c: die Wahlsteuergruppe gemäß Fig. 5a bei Wahl noch einer anderen Schaltschiene (R/C);
- Fig. 5d: die Wahlsteuergruppe gemäß Fig. 5a bei gewähltem Rückwärtsgang;
- Fig. 5e: die Wahlsteuergruppe gemäß Fig. 5a beim Zurückschalten auf die Schaltschiene für den ersten und zweiten Gang;
- Fig. 5f: die Wahlsteuergruppe gemäß Fig. 5a bei einer weiteren Variation der Schaltschiene;
- Fig. 5g: die Wahlsteuergruppe gemäß Fig. 5a in einer vorbestimmten Schaltschiene für den fünften und sechsten Gang;
- Fig. 5h: die Wahlsteuergruppe gemäß Fig. 5a beim Schalten in die Schaltschiene des siebten und achten Gangs; und
- Fig. 5i: die Wahlsteuergruppe gemäß Fig. 5a beim Zurückschalten auf die Schaltschiene des dritten und vierten Gangs.

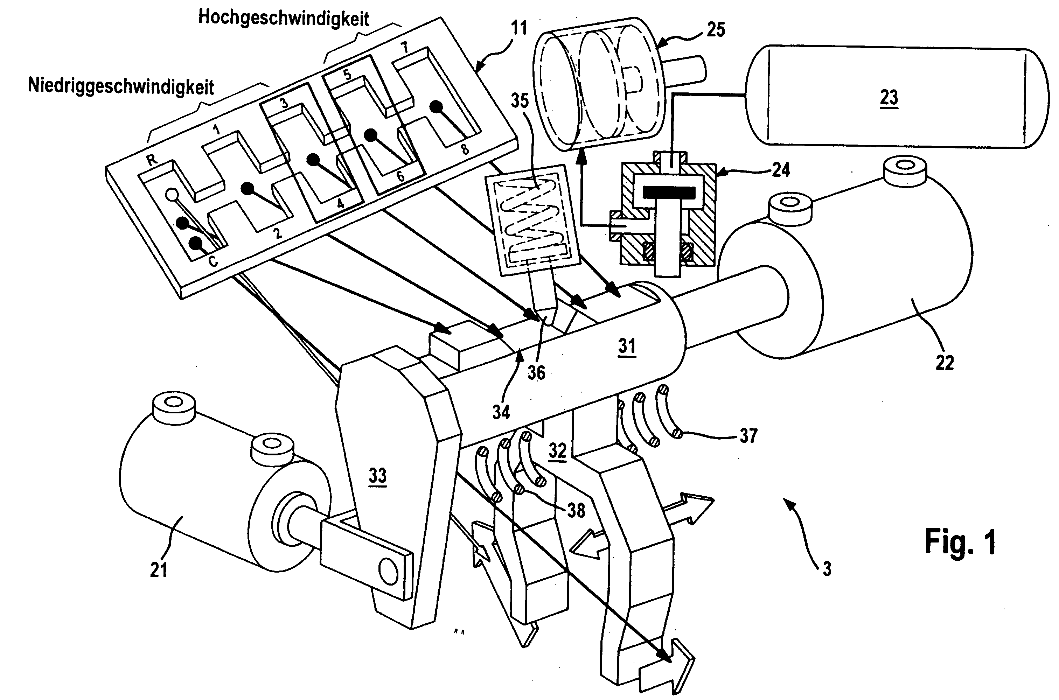

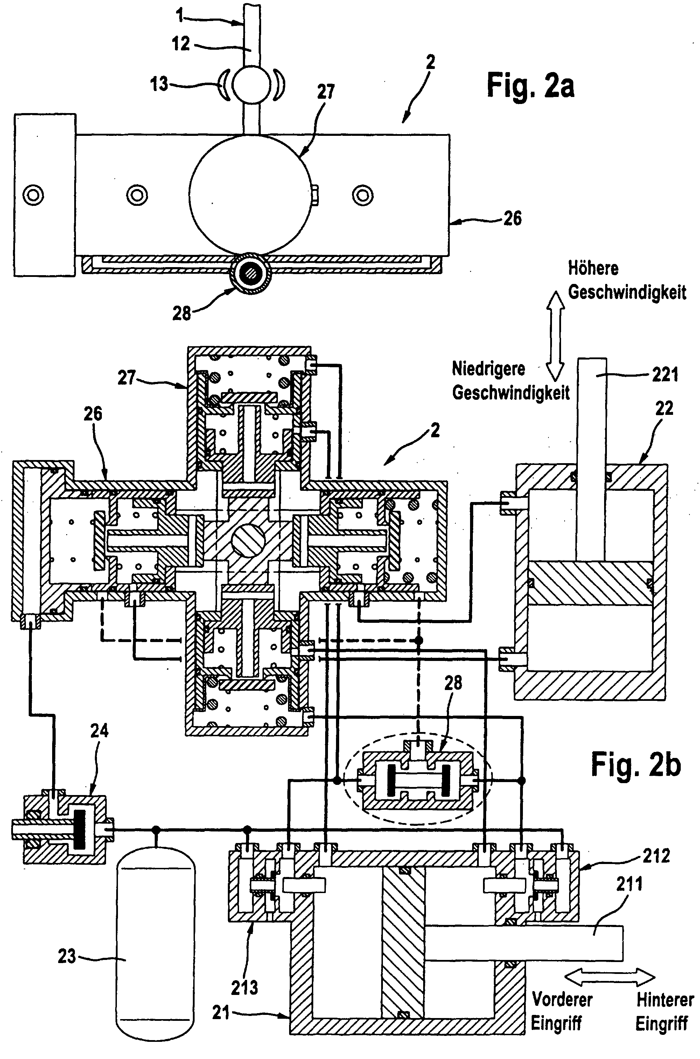

Wie insbesondere aus den Fig. 1, 2a und 2b erkennbar ist, weist das erfindungsgemäße Schaltgetriebe eine Schalthebeleinrichtung 1, eine Übertragungseinrichtung 2 und eine Schalteinrichtung 3 auf, wobei die Schalteinrichtung 3 auf ein hier nicht dargestelltes Getriebe einwirkt.

Fig. 1 zeigt in einer schematischen Darstellung insbesondere die Schalteinrichtung 3 des erfindungsgemäßen Schaltgetriebes. Die Schalteinrichtung 3 enthält eine Steuerstange 31 mit einer integrierten Schaltgabel 32, welche die Auswahl und den Eingriff in das gewählte Zahnrad des Getriebes bewirken. Die Steuerstange 31 weist an einem Ende eine Verbindungsstange 33 auf, die im Zusammenwirken mit einem doppelt wirkenden pneumatischen Stellglied 21 der Übertragungseinrichtung 2 eine Verdrehung der Steuerstange 31 um ihre Hauptachse ermöglicht. Die Steuerstange 31 ist ferner in Axialrichtung mit einem zweiten doppelt wirkenden pneumatischen Stellglied 22 verbunden, mittels dem eine Längsverschiebung in Axialrichtung der Steuerstange 31 möglich ist.

Auf der Steuerstange 31 ist eine Kurvenbahn 34 ausgebildet, die zusammen mit einer Feder 35 und einem Anker 36 die verschiedenen Ansatzpunkte für das Abtasten der verschiedenen Gänge bereitstellt. Zur Abtastung wird hierbei der Anker 36 durch die Kraft der Feder 35 in Richtung auf die Kurvenbahn 34 vorgespannt.

Die Steuerstange 31 wird von einer Seite mittels einer Feder 37 gegen den Ansatzpunkt gedrückt, der der Schaltschiene des dritten und vierten Gangs entspricht. Dies ist die Grundstellung des Schalthebels im Niedriggeschwindigkeitsbereich des hier beschriebenen Zweigruppengetriebes. Eine weitere Feder 38 drückt die Steuerstange 31 von der anderen Seite gegen den Ansatzpunkt der Schaltschiene des fünften und sechsten Gangs, d.h. in die Grundstellung des hohen Geschwindigkeitsbereichs des Zweigruppengetriebes. Die Federn 37 und 38 dienen hier als schematische Darstellung für eine Einrichtung, die in der Praxis häufig auch als eine einzelne Feder ausgebildet ist, die in zwei Richtungen wirkt.

Die verschiedenen Schaltschienen sind auf einem Register 11 der Schalthebeleinrichtung 1 erkennbar, in dem ein Schalthebel 12 aufgenommen ist, und in dessen vorgewählte Ausnehmung er eingreift, wenn der vorbestimmte Gang eingestellt ist. Wie am Register 11 erkennbar ist, weist das hier beispielhaft aufgeführte Schaltgetriebe acht Vorwärtsgänge auf.

Ferner enthält die Anordnung gemäß Fig. 1 noch einen Druckluftspeicher 23, von dem aus ein Ventil 24 versorgt wird. Das Ventil 24 dient zum An- und Abschalten eines Stellglieds 25, das im Getriebekasten angeordnet ist und zur Wahl des hohen bzw. niedrigen Geschwindigkeitsbereichs dient.

In den Fig. 2a und 2b ist die Übertragungseinrichtung 2 im näheren Detail dargestellt. Hierbei ist eine Verteilergruppe gezeigt, die aus einem Wahlverteiler 26 und einem Eingriffsverteiter 27 besteht, welche über Kreuz miteinander verbunden sind. Der Wahlverteiler 26 dient hierbei zur Auswahl der gewünschten Schaltschiene am Register 11, während der Eingriffsverteiler 27 den Eingriff mit einem der beiden Gänge jeder Schaltschiene herstellt.

Diese Verteilergruppe wird durch den Schalthebel 12 mechanisch angesteuert, der über ein Schwenkkugellager 13 mit der Führerkabine verbunden ist. Ferner ist in Fig. 2a ein Schaltventil 28 (select-low-valve) zur Wahl der Bereichsgruppe angeordnet, wobei in Fig. 2a die Verbindung gezeigt ist, mittels der der Druck vom Schaltventil 28 zu den beiden Anschlüssen des Wahlverteilers 26 geführt wird.

In Fig. 2b ist schematisch ein Querschnitt durch die Übertragungseinrichtung 2 und insbesondere durch die Verteilergruppe wiedergegeben. Die Versorgungsanschlüsse des Wahlverteilers 26 sind mit beiden Seiten des Wahlstellglieds 22 zur Steuerung der Bewegung von dessen Kolben 221 verbunden.

Die Versorgungsanschlüsse des Eingriffsverteilers 27 sind mit beiden Seiten des Eingriffsstellglieds 21 zur Steuerung der Bewegung von dessen Kolben 211 verbunden. An das Stellglied 21 sind zwei pneumatische Schaltventile 212 und 213 angefügt, die im normalen Einsatz zur Zuführung von Druck aus dem Speicher 23 zu den beiden Versorgungsanschlüssen des Eingriffsverteilers 27 und des Schaltventils 28 geschaltet sind. Die Schaltventile 212 und 213 werden abwechselnd zur Atmosphäre belüftet, wenn der Kolben 211 einen seiner Endhübe erreicht. Aufgrund der Funktionsweise des Ventils 28 wird die Druckversorgung zum Wahlverteiler 26 abgeschaltet, wenn entweder das Ventil 212 oder das Ventil 213 abgeschaltet ist.

Das Schaltventil 24, welches bei herkömmlichen Systemen zur Wahl des niedrigen oder hohen Geschwindigkeitsbereichs verwendet wird, ist ebenfalls mit einer Seite des Wahlverteilers 26 zur Steuerung von dessen Hilfskolben verbunden.

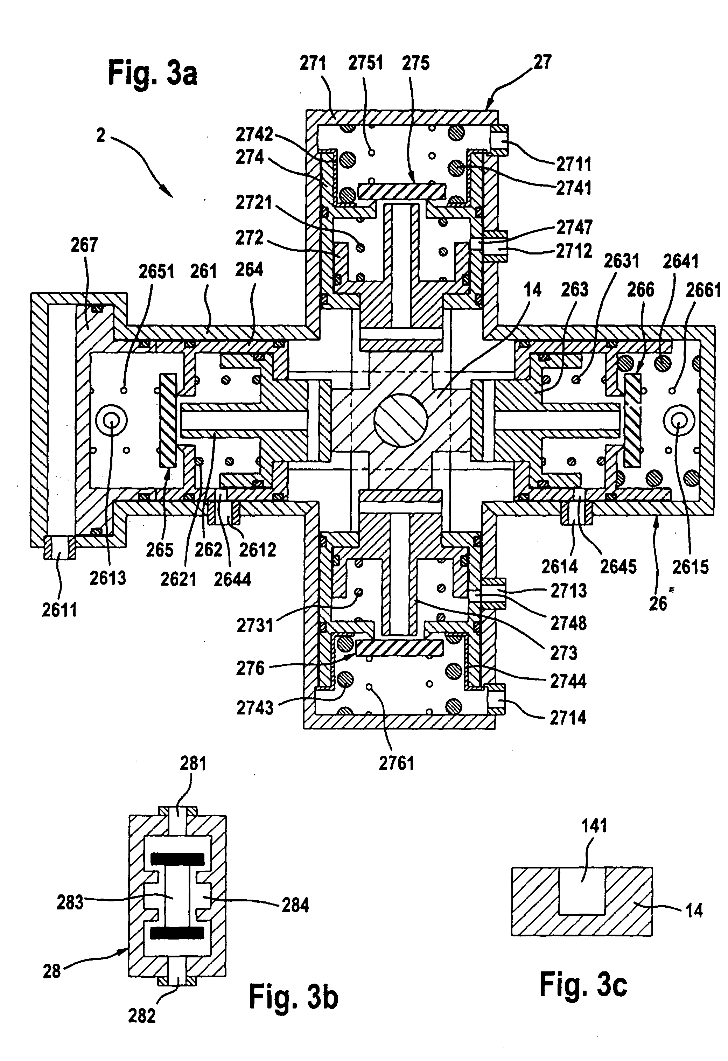

In den Fig. 3a, 3b und 3c sind die wesentlichen Komponenten der Verteilergruppe und des Schaltventils 28 dargestellt. Die Verteilergruppe enthält ein Gehäuse 271 des Eingriffsverteilers 27 und ein Gehäuse 261 des Wahlverteilers 26. Darin sind Steuerkolben 262, 263, 272 und 273 angeordnet, die abwechselnd durch die Bewegung eines Gleitkreuzes 14 in ihre Richtungen bewegt werden, wobei das Gleitkreuz 14 durch den Schalthebel 12 angesteuert wird, der im zylindrischen Sitz 141 gelagert ist (vgl. Fig. 3c).

Der Eingriffsverteiler 27 (vertikaler Arm der gekreuzten Verteilergruppe) weist das Gehäuse 271 auf, welche mit Anschlüssen 2711, 2712, 2713 und 2714 versehen ist. Im Gehäuse 271 ist ein Schieber 274 angeordnet und mittels O-Ringen gegen das Gehäuse 271 abgedichtet.

Innerhalb des Schiebers 274 sind der Steuerkolben 272 zusammen mit einem-O-Ring und einer Feder 2721, sowie der Steuerkolben 273 zusammen mit einem O-Ring und einer Feder 2731 bewegbar eingefügt.

Am äußeren Ende ist der Schieber 274 durch eine Feder 2741 vorgespannt, welche mit einem Halter 2742 zusammenwirkt. Ferner trägt der Schieber 274 ein Ventil 275 aus Kunststoff bzw. Gummi und eine Feder 2751, welche das Ventil 275 vorspannt. Auf der anderen Seite ist der Schieber 274 durch eine Feder 2743 vorgespannt, welche mit einem Halter 2744 zusammenwirkt. Ferner trägt der Schieber 274 ein Ventil 276 aus Kunststoff oder Gummi, welches mittels einer Feder 2761 vorgespannt ist.

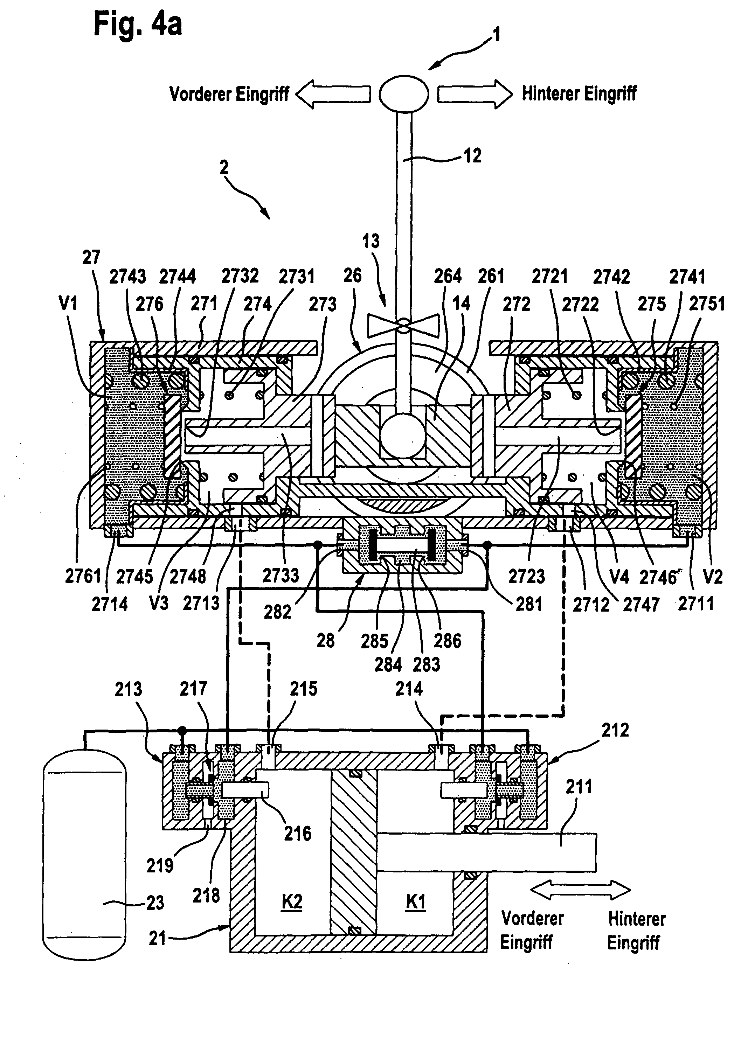

Am Schieber 274 sind ferner einteilig hiermit ausgebildete Ventilsitze 2745 und 2746 angeordnet (vgl. Fig. 4a), die mit den Ventilen 275 und 276 zur Versorgung zusammenwirken. An den Steuerkolben 272 und 273 sind integral Abgabe-Ventilsitze 2732 und 2722 ausgebildet. Ferner ist durch das Gehäuse 271, den Schieber 274, einen O-Ring, das Ventil 276 und den Ventilsitz 2745 eine Versorgungskammer V1 definiert. Gleichermaßen ist auf der anderen Seite durch das Gehäuse 271, den Schieber 274, einen O-Ring, das Ventil 275 und den Ventilsitz 2746 eine Versorgungskammer V2 definiert. Der Schieber 274 weist ferner Öffnungen 2747 und 2748 auf.

Durch den Schieber 274, seine O-Ringe, den Steuerkolben 273 und einen weiteren O-Ring, das Ventil 276 und seine beiden Versorgungs- und Abgabe-Ventilsitze 2745 und 2732 ist eine Versorgungskammer V3 definiert. Auf der anderen Seite ist durch den Schieber 274, seine O-Ringe, den Steuerkolben 272 und einen O-Ring, das Ventil 275 und seine beiden Versorgungs- und Abgabe-Ventilsitze 2746 und 2722 eine Versorgungskammer V4 definiert. Innerhalb der Steuerkolben 272 bzw. 273 sind zudem Abgabeanschlüsse 2723 bzw. 2733 ausgebildet.

Der Wahlverteiler 26 (horizontaler Arm der kreuzförmigen Verteilergruppe) weist das Gehäuse 261 auf; welches Anschlüsse 2611, 2612, 2613, 2614 und 2615 enthält. Hierbei ist ein Schieber 264 mit O-Ringen und Öffnungen 2644 und 2645 in das Gehäuse 261 eingefügt. Innerhalb des Schiebers 264 sind der Steuerkolben 262 zusammen mit einem O-Ring und einer Feder 2621, sowie der Steuerkolben 263 zusammen mit einem O-Ring und einer Feder 2631 bewegbar eingefügt.

Der Schieber 264 trägt ein Ventil 265 aus Kunststoff oder Gummi, mit dessen Feder 2651. Auf der anderen Seite wird der Schieber 264 durch eine Feder 2641 vorgespannt und trägt ein Ventil 266 aus Kunststoff oder Gummi mit dessen Feder 2661. Auf Seiten des Ventils 265 weist der Schieber 264 zudem auf einen Hilfskolben 267 zu, der mit O-Ringen versehen ist.

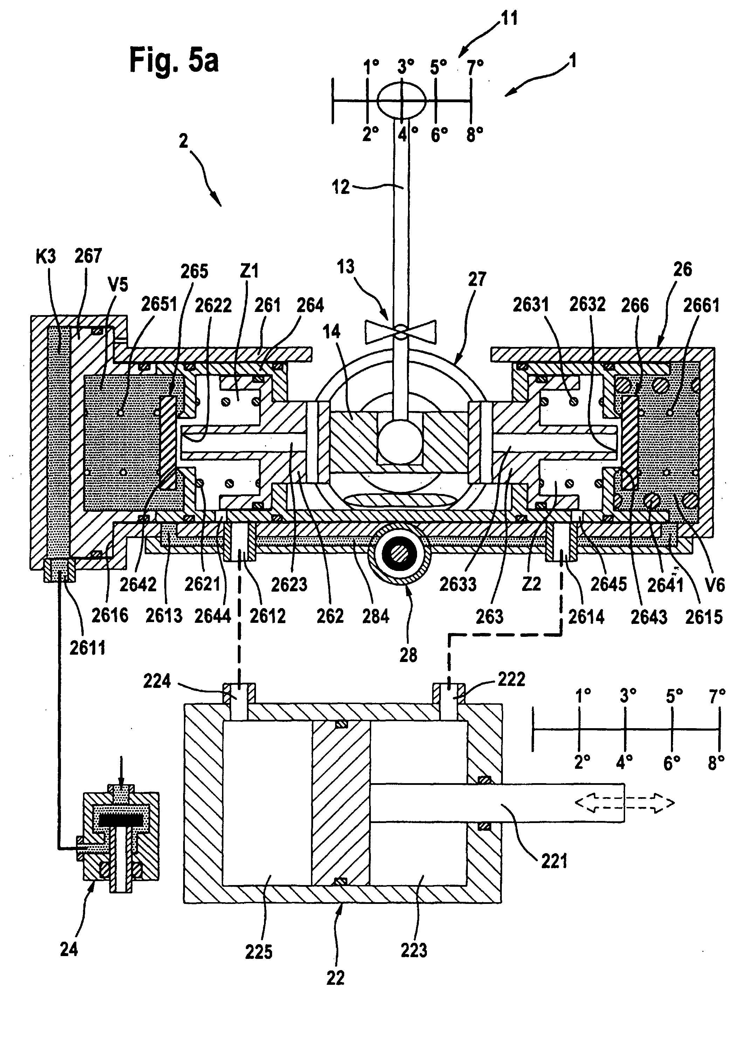

Durch das Gehäuse 261, den Hilfskolben 267 und dessen O-Ring ist im Wahlverteiler 26 eine Kammer K3 definiert. Ferner ist integral mit dem Schieber 264 jeweils ein Ventilsitz 2642 bzw. 2643 für die Versorgung ausgebildet. An den Steuerkolben 262 und 263 sind einstückig Abgabe-Ventilsitze 2622 und 2632 ausgebildet. Durch das Gehäuse 261, den Hilfskolben 267, einen O-Ring, den Schieber 264, dessen O-Ring, das Ventil 265 und den Versorgungs-Ventilsitz 2642 ist ferner eine Versorgungskammer V5 definiert. Auf der anderen Seite des Schiebers 264 ist durch das Gehäuse 261, den Schieber 264, seinen O-Ring, das Ventil 266 und dessen Ventilsitz 2643 eine Versorgungskammer V6 definiert. Ferner ist durch den Schieber 264, dessen O-Ringe, den Steuerkolben 262 und einem O-Ring, das Ventil 265 und dessen beide Versorgungs- und Abgabe-Ventilsitze 2642 und 2622 eine Zuführkammer Z1 definiert. Am anderen Ende ist durch den Schieber 264, dessen 0-Ringe, den Steuerkolben 263 und einen O-Ring, das Ventil 266 und seine beiden Versorgungs- und Abgabe-Ventilsitze 2643 und 2632 eine Zuführkammer Z2 definiert. Innerhalb der Steuerkolben 262 und 263 sind zudem jeweils Abgabeanschlüsse 2623 bzw. 2633 ausgebildet (vgl. Fig. 5a).

Das Schaltventil 28 ist im Boden des Gehäuses 261 des Wahlverteilers 26 integriert und weist zwei gegenüberliegende Anschlüsse 281 und 282 auf. Ein Abstandsring 283 trägt zwei Ventile aus Kunststoff oder Gummi, und ein Weg 284, der Verbindung zu den Anschlüssen des Wahlverteilers 26 herstellt, verbindet die internen Anschlüsse 2613 und 2615.

Die Funktionsweise des Eingriffsverteilers 27 und des damit verbundenen Stellglieds 21 wird nun anhand der Fig. 4a bis 4e erläutert.

Die Fig. 4a stellt das Eingriffssystem in der neutralen Lage dar. Die Anschlüsse 2711 und 2713 des Eingriffsverteilers 27 werden in normaler Weise durch die offenen Schaltventile 212 und 213 des Stellglieds 21 versorgt. Die Versorgungskammern V2 und V1 stehen beide unter dem gleichen Druck, so dass der Schieber 274 durch die ausgeglichenen Kräfte des Drucks und der vorgespannten Federn 2741 und 2751 in seiner Zentralstellung gehalten wird.

Der Schalthebel 12 und das Gleitkreuz 14 werden durch die von den Steuerkolben 272 und 273 über die Federn 2721 und 2731 aufgebrachten Kräfte in ihrer zentralen Achse gehalten.

Der Druck in den Kammern V2 und V1 wird durch die Ventile 275 und 276 abgedichtet, welche durch die Federn 2751 und 2761 gegen die Ventilsitze 2746 und 2745 gedrückt werden, während die Kammern V4 und V3 durch die Anschlüsse 2723 und 2733 zur Atmosphäre belüftet sind.

Die Versorgungsanschlüsse 2712 und 2713 stehen wie auch Stellgliederanschlüsse 214 und 215 und die Kammern K1 und K2 nicht unter Druck. Der Kolben 211 wird, nach dem kein Druck auf beiden Seiten vorliegt, durch die intern durch das Getriebe ausgeübten Kräfte in seiner zentralen Achse gehalten. Das Schaltventil 28 wird von beiden Seiten derart mit Druck beaufschlagt, dass auch der Wahlverteiler 26 beaufschlagt ist.

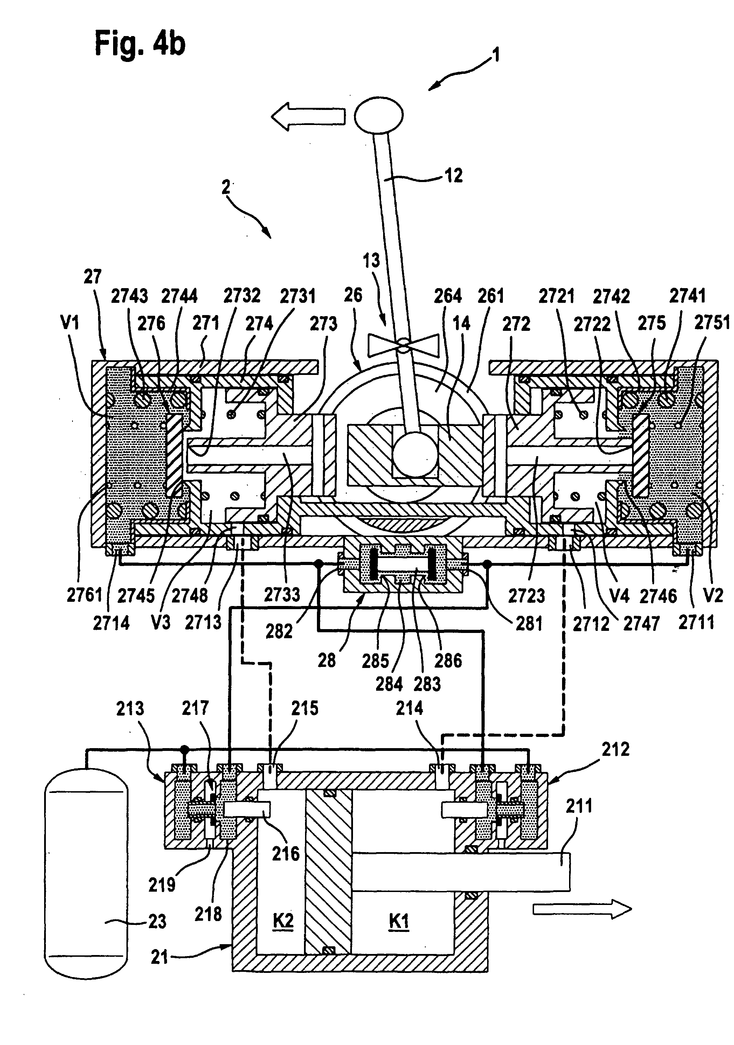

Die Fig. 4b stellt das Eingriffssystem während des Beginns eines Eingriffs dar. Die Verteilung des zugeführten Drucks ist unverändert. Der Schalthebel 12 wird etwas nach vorne (in der Darstellung nach links) gedrückt und das Gleitkreuz 14 geht zurück. Hierdurch wird der Kolben 272 gegen die Feder 2721 und das Ventil 275 bewegt. Der Abgabekolben-Ventilsitz 2722 wird geschlossen und der Versorgungs-Ventilsitz 2746 öffnet sich.

Der Druck in der Kammer V2 beginnt in die Kammer V4 überzutreten und erhöht dort den Druck und somit eine Reaktionskraft gegen die auf den Schalthebel 12 aufgebrachte Kraft. Vom Versorgungsanschluss 2712 und dem Stellgliederanschluss 214 tritt dieser Druck in die Kammer K1 ein und veranlasst den Kolben 211 sich nach links gegen den Getriebekasteneingriffswiderstand zu bewegen.

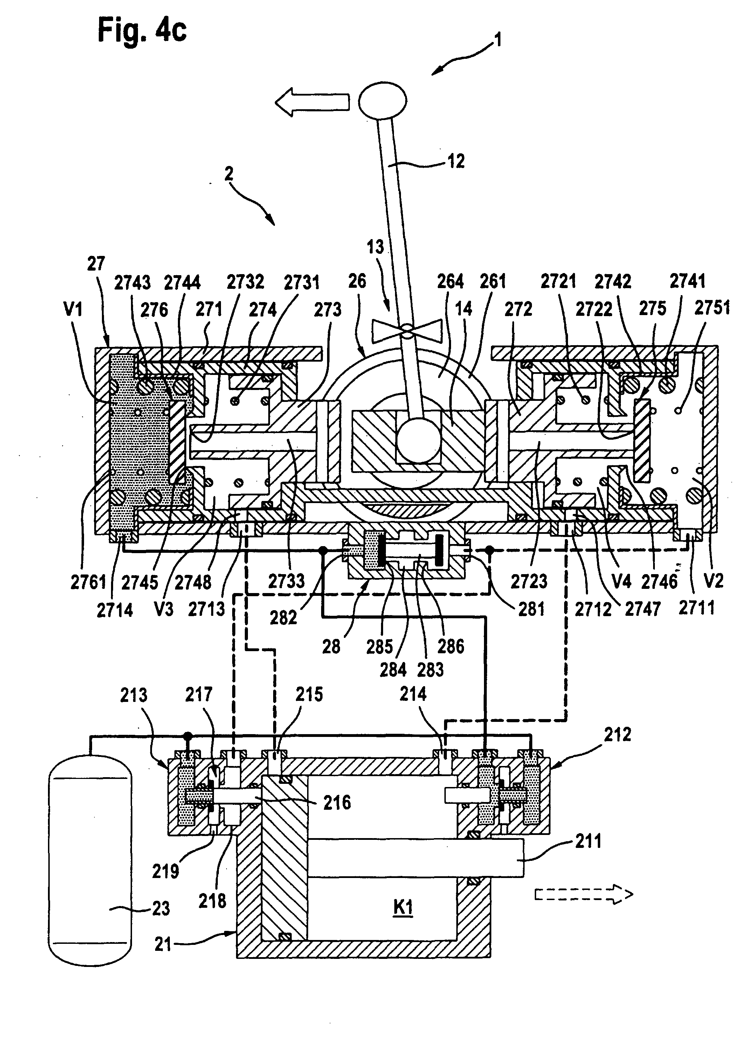

In Fig. 4c ist das Eingriffssystem bei vollständigem Eingriff dargestellt. Wenn der Schalthebel 12 weiter nach vorne gedrückt wird, erreicht der Kolben 211 seinen linksseitigen Hub, wodurch der Zahnradeingriff vervollständigt wird und ein Anker 216 zum Öffnen des Einlass-/Auslass-Ventils 217 am Schaltventil 213 gedrückt wird. Der rechtsseitige Verteilerzuführdruck wird durch eine Kammer 218 und einen Abgabeanschluss 219 zur Atmosphäre belüftet. Der Druck der Kammern V2 und V4 geht in kurzer Zeit ab, wodurch die Reaktionskraft auf den Schalthebel 12 beseitigt wird.

Ferner wird auf das Schaltventil 28 durch den rechtsseitigen Druck verschoben, um sein Doppelprüfventil 283 zum Schließen eines Ventilsitzes 285 zu bewegen, während der Ventilsitz 286 offenbleibt und den Auswahlversorgungsdruck zur Atmosphäre belüftet.

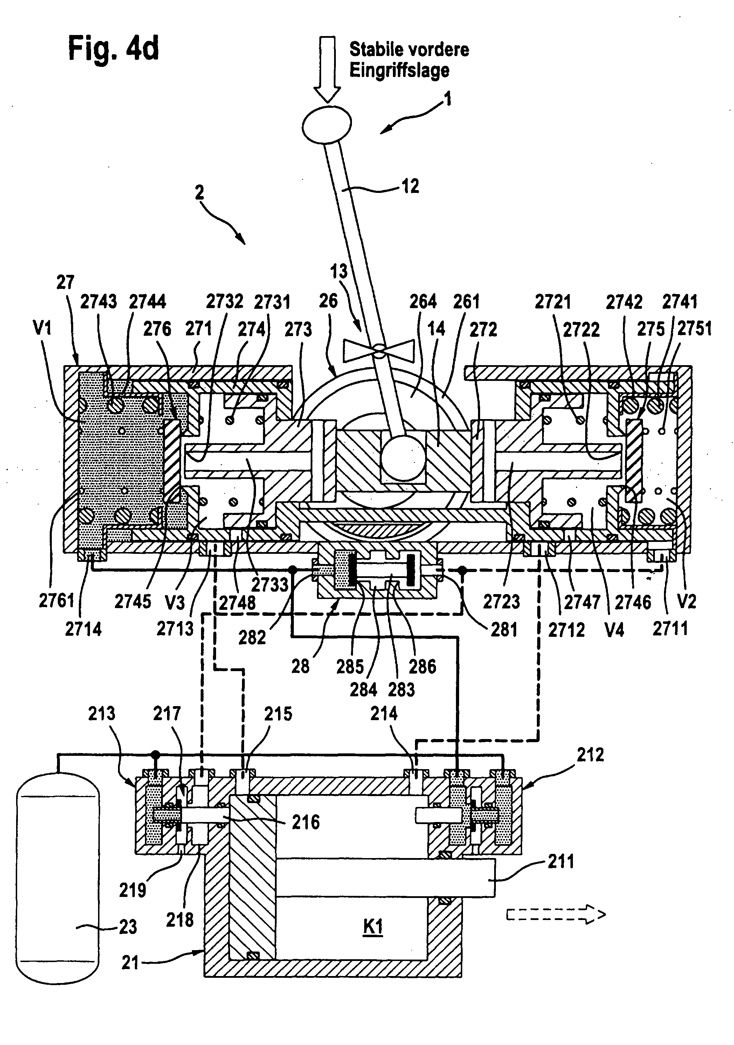

In Fig. 4d ist das Eingriffssystem mit dem zurückgesetzten Verteiler dargestellt. Wenn die Drücke in der Stellgliedkammer K1 und in den Verteilerkammern V2 und V4 vollständig abgeleitet sind, wird der Schieber 274 durch den Druck der Kammer V1 gegen die Wirkung der Feder 2741 zur rechten Seite gedrückt und gehalten. Abgesehen von dem Druck in der Kammer V1 sind alle anderen aktiven Kammern nun zur Atmosphäre belüftet und der Schalthebel 12 bleibt in seiner vorderen Eingriffsposition.

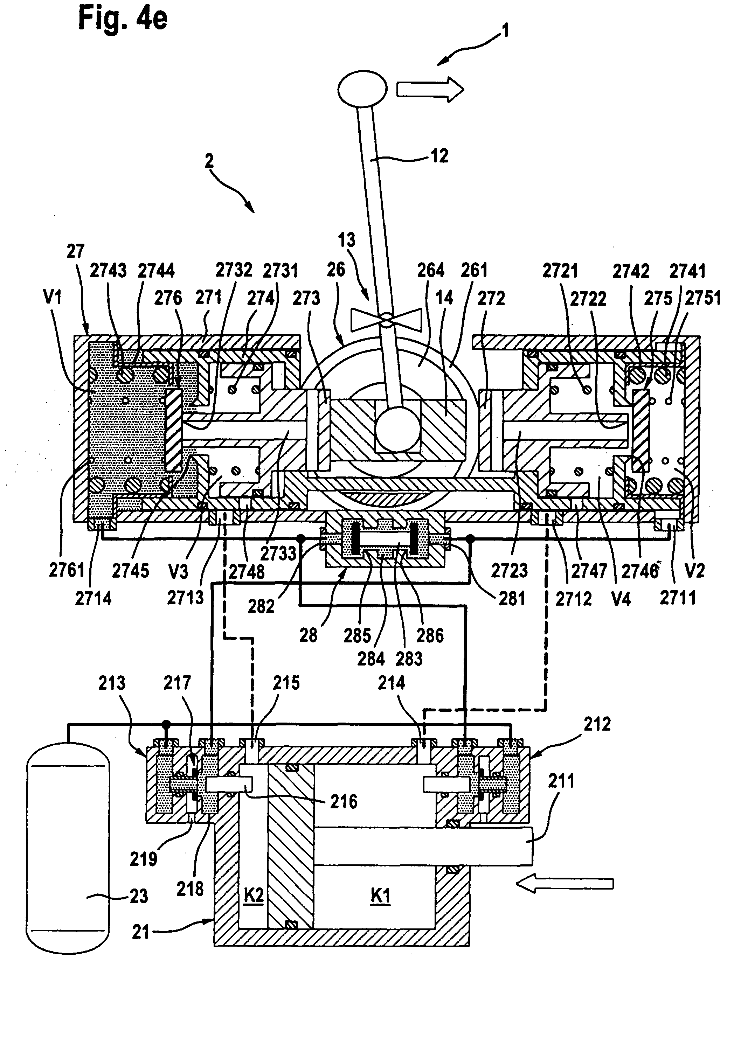

In Fig. 4e ist das Eingriffssystem dargestellt, während es beginnt, außer Eingriff zu gelangen. Wenn der Schalthebel 12 zurückgezogen wird, während der Schieber 274 durch den Druck der Kammer V1 auf der rechten Seite gehalten wird, drückt das Kreuz 14 den Steuerkolben 273 gegen die Feder 2731, so dass dieser das Ventil 276 trifft und auf diese Weise den Abgabe-Ventilsitz 2732 schließt und den Zugversorgungs-Ventilsitz 2745 öffnet.

Der Druck strömt von der Kammer V1 zur Kammer V3 und von dort zu den Versorgungsanschlüssen 2742 und 2713, und zum Einlassstellgliedanschluss 215 sowie der Kammer K2. Dort drückt er die rechte Seite des Kolbens 211 gegen die zum Außereingriffbringen des Zahnrads erforderliche Kraft. Diese Kraft für die Aufhebung des Eingriffs ist gewünscht hinsichtlich des Drucks, der auf den Steuerkolben 273 und folglich auf den Schalthebel 12 wirkt. Zur gleichen Zeit wird verlässt der Kolben 211 den Anker 216 des Schaltventils 213, welches wieder den Druck sowohl auf die rechten Seiten des Verteilers, der beginnt, den Druck in der Kammer V2 zu erhöhen, als auch auf das Ventil 28 freischaltet, welches das Doppelprüfventil 283 zur Zuführung von Druck zur Leitung und zum Wahlverteiler 26 veranlasst.

Der völlig außer Eingriff gelangte Zustand des Eingriffssystems ist wiederum in Fig. 4a dargestellt. Wenn der Druck in der Kammer V2 einen Wert erreicht hat, der nahe dem Druck in der Kammer V1 ist, wird der Schieber 274 automatisch durch die vorgespannten Federn 2741 und 2743 in seiner zentralen Achse positioniert und alle inneren Teile und der Schalthebel 12 nehmen die neutrale Lage an, welche bereits in Fig. 4a gezeigt ist.

Jetzt ist noch zu bemerken, dass eine Betätigung des Schalthebels 12 in die andere Richtung als die erläuterte aufgrund der völlig symmetrischen Ausgestaltung des Eingriffsverteilers 27 und seines Stellgliedes 21 in gleicher Weise erfolgt.

Nachfolgend wird nun die Funktionsweise des Wahlverteilers 26 und des zugehörigen Stellglieds 22 erläutert.

In Fig. 5a ist das Wahlsystem in der ausgewählten Schaltschiene für den dritten bzw. vierten Gang dargestellt. Wenn der Schalthebel 12 in seiner neutralen Lage ist und der Niedriggeschwindigkeitsbereich gewählt wurde, werden der Wahlverteiler 26 und der Schalthebel 12 selbst in der in Fig. 5a gezeigten Position mittels den Steuerkolben 262 und 263 gehalten, die durch die Federn 2621 und 2631 gedrückt werden, welche innerhalb des Schiebers 264 angeordnet sind. Der Schieber 264 wird auf der rechten Seite gemäß der Darstellung in dieser Fig. durch die Feder 2641 und auf der linken Seite durch den Hilfskolben 267 in seiner zentralen Stellung gehalten. Der Kolben 267 wird gegen eine vorstehende Fläche 2616 am Gehäuse 261 durch den Druck in der Kammer K3 gedrückt, welcher durch das Schaltventil 24 zugeführt wird, das im Niedriggeschwindigkeitsbereich durch eine innere Kurvenbahn des Schaltgetriebes geschaltet wird. Auch die Getriebesteuerstange 31 (vgl. Fig. 1) wird in der ausgewählten Schaltschiene für den dritten bzw. vierten Gang mittels dem Ansatzpunkt des dritten bzw. vierten Gangs gegenüber dem Ansatzpunkt des fünften bzw. sechsten Gangs auf einer Seite und durch die Feder 37 auf der anderen Seite gehalten.

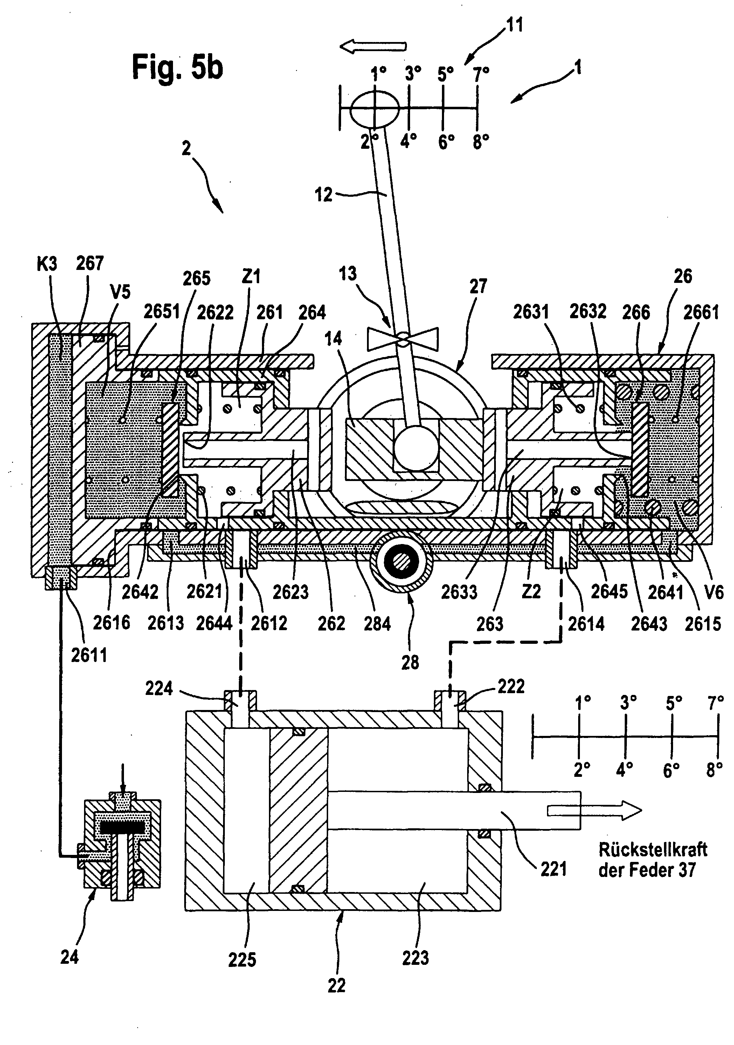

Fig. 5b stellt das Wahlsystem dar, wenn es von der Schaltschiene des dritten bzw. vierten Gangs zur Schaltschiene des ersten bzw. zweiten Gangs übertritt.

Ein Ziehen des Schalthebels 12 zur linken Seite gemäß dieser Fig. mit einer moderaten Kraft bewirkt, dass der Steuerkolben 263 gegen die Kraft der Feder 2631 zur rechten Seite gedrückt wird, dass ein Abgabe-Ventilsitz 2632 geschlossen wird, und daß das Ventil 266 am Versorgungs-Ventilsitz 2643 geöffnet wird. Der Schieber 264 wird auf der rechten Seite mittels der Feder 2641 und auf der linken Seite durch den Hilfskolben 267 in seiner zentralen Stellung gehalten. Der Druck strömt von der Kammer V6 in die Kammer Z2, passiert die Anschlüsse 2645 und 2614, und geht von dort zu einem Anschluss 222 und in eine Kammer 223 des Wahlstellglieds 22, bis ein Grenzwert erreicht ist, der durch die auf den Schalthebel 12 aufgebrachte Kraft zugelassen wird. Der Kolben 221 des Stellglieds 22 wird so durch diesen begrenzten Druck zur Erzielung der Reaktionskraft der Feder 37 bewegt, wobei er jedoch durch den härteren Ansatzpunkt der R/C-Wahlschiene gestoppt wird. Dies bringt die Steuerstange 31 des Getriebes zur gewählten Schaltschiene des ersten und zweiten Gangs. Da bei der üblichen Handhabung des Getriebes gefordert wird, dass der Schalthebel 12 in dieser Position bleiben muss, wenn er frei vorliegt, kommt er zurück zur ursprünglichen Auswahlposition im dritten bzw. vierten Gang, wobei er durch den Steuerkolben 263 und seine Feder 2631 gedrückt wird. Wenn dieser Gang einmal im Eingriff ist, ist die Reaktionskraft auf den halben Hub der Feder 2631 beschränkt.

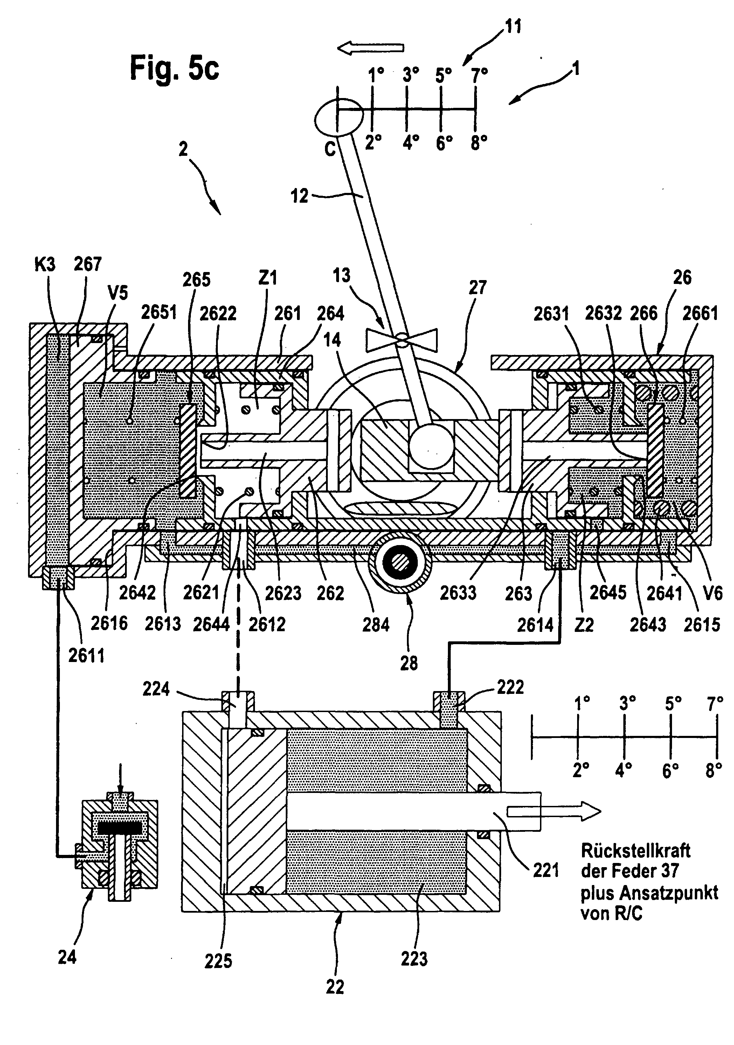

Fig. 5c stellt das Wahlsystem dar, wenn es von der Schaltschiene des ersten bzw. zweiten Gangs zur Schaltschiene für R/C übergeht. Wird nun der Schalthebel 12 mit einer höheren Kraft nach links gezogen, so wird der Steuerkolben 263 veranlasst, das Ventil 266 gegen einen vergrößerten Druck in der Kammer Z2 offenzuhalten. Der Schieber 264, der zuvor zwischen den durch die gleichen Drücke in den Versorgungskammern V5 und V6 erzeugten Kräften ausbalanciert war, wird nun mit der neuen erhöhten Kraft beaufschlagt, die durch den Druck in der Kammer Z2 erzeugt wird. Der Schieber 264 wird daher zu einer Bewegung zur rechten Seite veranlasst, wobei er die Last der Feder 2641 gewinnt. Zusammen mit dem Schieber 264 und dem Steuerkolben 263 verschiebt sich auch der Schalthebel 12 in seine neue R/C-Position. Der Druck in der Versorgungskammer Z2 strömt durch die bereits erläuterten Wege in die Kammer 223 des Wahlstellglieds 22. Der Kolben 221 des Stellglieds 22 wird dann durch diesen erhöhten Druck bewegt, die Reaktionskraft der Feder 37 zu gewinnen und den Ansatzpunkt der R/C-Auswahl zu erreichen, wodurch die Steuerstange 31 des Getriebes zum gewählten R/C-Gangregister gebracht wird.

Auch in diesem Fall muss der Schalthebel 12 mit einer bestimmten Anstrengung in seiner Position gehalten werden, wenn diese auch reduziert ist hinsichtlich der bisher für den R/C-Ansatzpunkt erforderlichen, da er sonst in die ausgewählte Position des dritten bzw. vierten Gangs wie im vorherigen Schritt zurückkehrt.

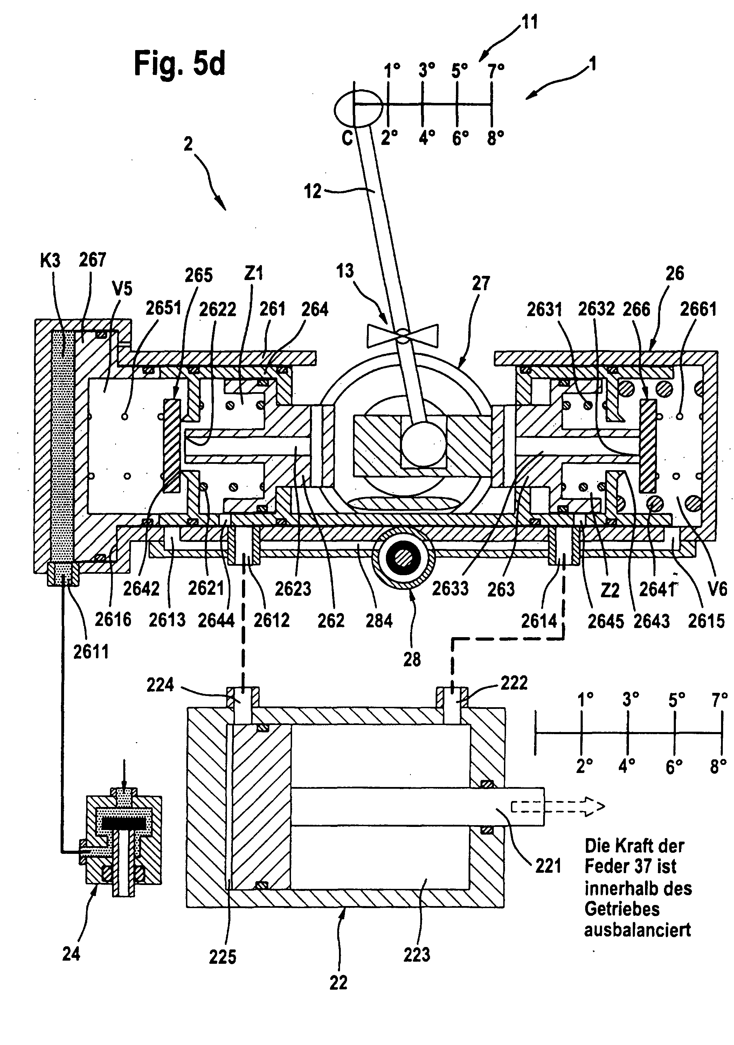

Fig. 5d stellt das Wahlsystem dar, wenn der Rückwärtsgang in Eingriff ist. Dies ist ein Beispiel dafür, was passiert, wenn ein ausgewählter Gang im Eingriff ist. Dieses Beispiel ist repräsentativ für alle anderen gewählten Gänge.

Ausgehend von der Anordnung der Elemente in Fig. 5c, wenn der Schalthebel 12, der manuell linksseitig in der R/C-Position gehalten wird, auch nach vorne bewegt wird, um den Rückwärtsgang in Eingriff zu bringen, geschieht das folgende:

Das linke Schaltventil 213 des Eingriffsstellglieds 21, welches den Versorgungsdruck auch auf der rechten Seite des Ventils 28 abgibt, wird durch den Kolben 211 ausgeschaltet. Das Ventil 213 gibt den Versorgungsdruck aus beiden Kammern V5 und V6 des Wahlverteilers 26 ab. Die Druckreaktionskraft auf den Steuerkolben 26 wird Null, während nur die Kraft der Feder 2631 aktiv bleibt, welche auf den Schalthebel 12 übertragen wird. Der Schieber 264 wird wiederum durch die Feder 2641 gegen den Hilfskolben 267 zentriert. Der Schalthebel 12 kann in der Rückwärtsgangposition durch das Gangregister bei einer begrenzten Last bleiben, die zur Gewinnung der Kraft der Feder 2631 in ihrem Endhub erforderlich ist. Die Versetzung des Schiebers 264 wird durch die Kompression der Feder 2631 ersetzt. Der Druck und die Kraft auf das Wahlstellglied 22 werden beseitigt und die Steuerstange 31 wird in der Rückwärtsgangposition mittels ihres internen Hebelwerks gehalten, ohne dass übrige Lasten auferlegt werden.

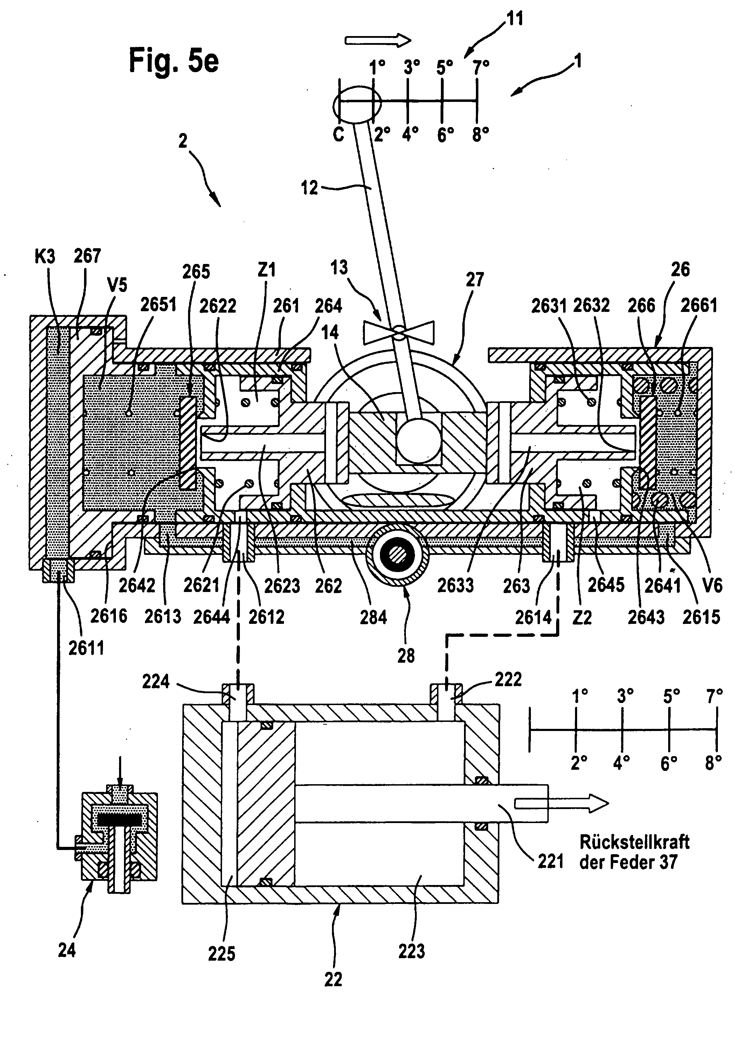

In Fig. 5e ist das Wahlsystem dargestellt, wenn ein Übergang von der R/C-Schaltstellung zur Schaltschiene des ersten bzw. zweiten Gangs beginnt. Nun sei auf die Konfiguration gemäß Fig. 5c zurückgekommen. Um die auf den Schalthebel 12 aufgebrachte Kraft genug zu reduzieren, damit dieser zur rechten Seite durch die durch den Druck und die Feder 2631 auf den Steuerkolben 263 aufgebrachten Kräfte gedrückt wird, wird folgendes veranlasst:

Zuerst veranlasst dieser Kolben 263 das Ventil 266 dazu, den Versorgungs-Ventilsitz 2643 zu schließen, und dann den Abgabe-Ventilsitz 2632 zu öffnen. Dann beginnt der Druck in der Kammer Z2, wie dies in Fig. 5e gezeigt ist, sich zu verringern und während dieser Phase gelangt der Schieber 264 aus seiner Gleichgewichtslage und wird durch die Feder 2641 wieder zur linken Seite gegen den Hilfskolben 267 gedrückt. Folglich erreicht der Schalthebel 12 seine Schaltschiene des ersten bzw. zweiten Gangs. Die gleiche Druckreduzierung in der Kammer Z2 des Verteilers wird zur Kammer 223 des Stellglieds 22 und zu dessen Kolben 221 übertragen, der, nach dem er seine Kraft nun durch die Feder 37 der Steuerstange 31 gewinnt, damit beginnt, sich zur rechten Seite zu bewegen, bis er die Position der Schaltschiene des ersten bzw. zweiten Gangs erreicht, wie dies in Fig. 5b gezeigt ist. Der Schalthebel 12 muss mit einer geeigneten Kraft in dieser Position gehalten werden, da er sonst, wenn er frei gelassen wird, die Grundwahlposition am dritten bzw. vierten Gang erreicht.

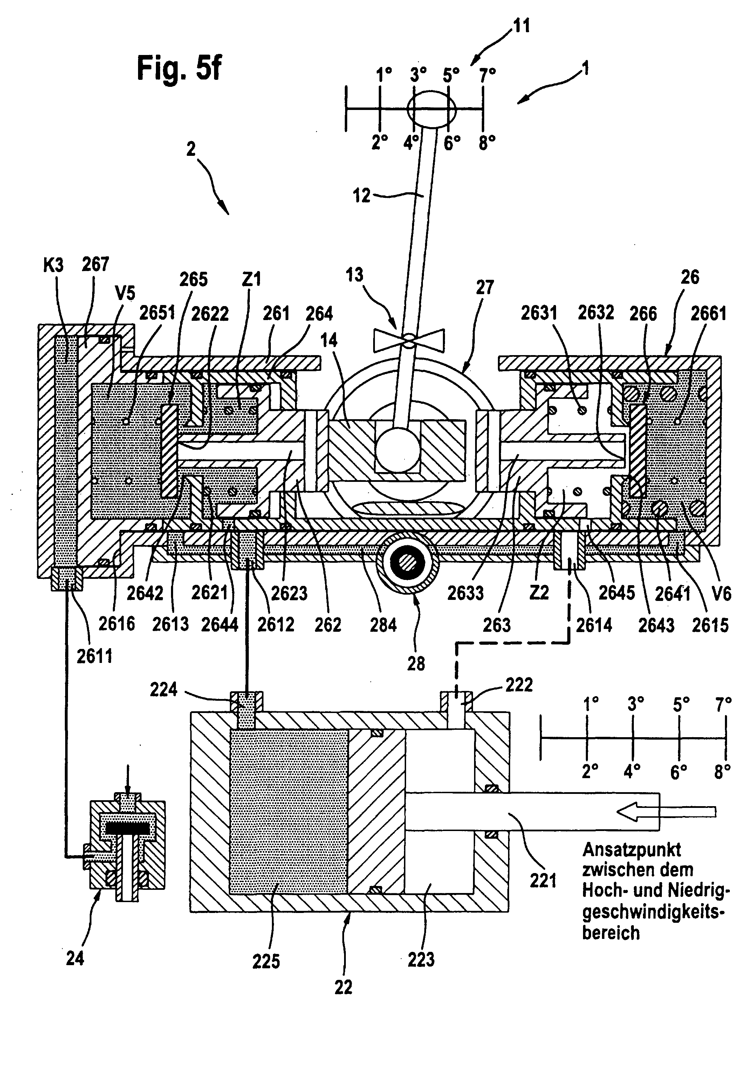

Fig. 5f stellt das Wahlsystem dar, wenn es vom Niedriggeschwindigkeitsbereich (dritter bzw. vierter Gang) zum Hochgeschwindigkeitsbereich (fünfter bzw. sechster Gang) übergeht. Der Übergang vom ersten bzw. zweiten Gang zur Schaltschiene des dritten bzw. vierten Gangs wird nicht erläutert, da er sich auf einfache Weise durch einen Vergleich der Fig. 5b mit der Fig. 5a ergibt.

Der Übergang zwischen der Schaltschiene des dritten bzw. vierten Gangs und der Schaltschiene des fünften bzw. sechsten Gangs erfordert dagegen einige Erläuterungen, da hierbei einige neue Elemente mit einbezogen werden.

Beginnend von der zentralen Lage, wie sie in Fig. 5a gezeigt ist, wird der Schalthebel 12 zur rechten Seite gedrückt, wodurch der Steuerkolben 262 gegen die Feder 2621 zur linken Seite gedrückt wird, um den Abgabe-Ventilsitz 2622 zu schließen, und das Ventil 265 am Versorgungs-Ventilsitz 2642 zu öffnen. Der Schieber 264 wird mittels der Feder 2641 auf der rechten Seite und durch den Hilfskolben 267 auf der linken Seite weiterhin in seiner zentralen Stellung gehalten.

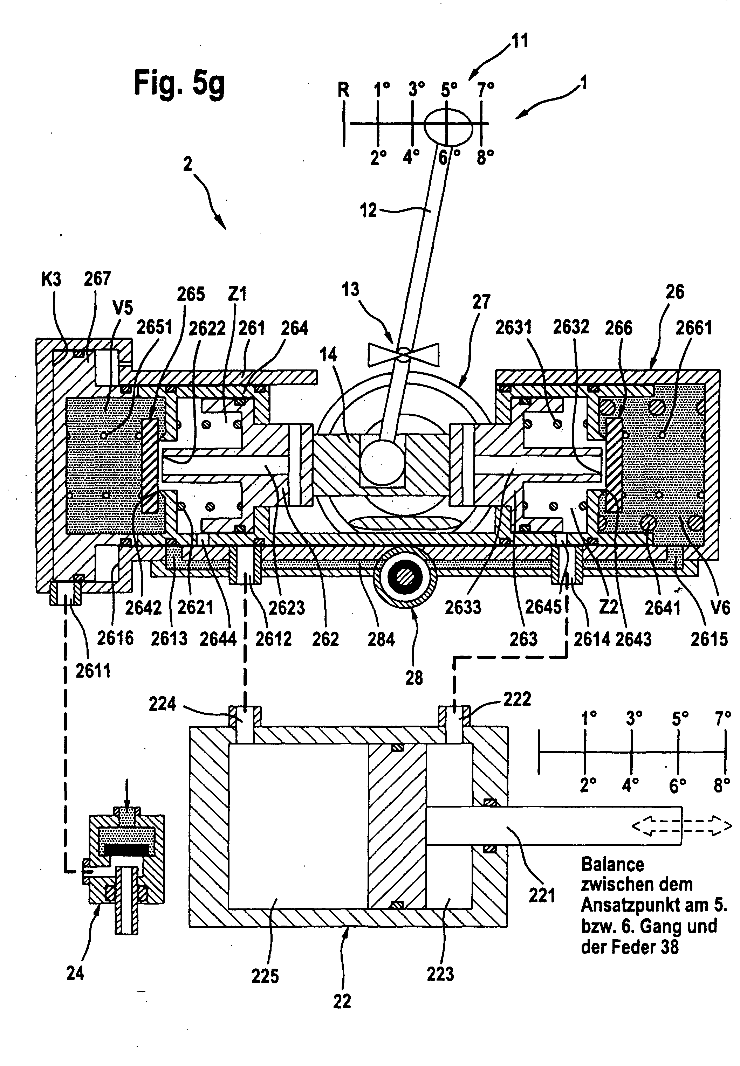

Der Druck strömt von der Kammer V5 in die Kammer Z1, erreicht dort einen Wert, der der auf den Schalthebel 12 aufgebrachten Kraft entspricht, und tritt durch die Anschlüsse 2644 und 2612 und von dort zum Anschluss 224 und in die Kammer 225 des Wahlstellglieds 22 über. Der Kolben 221 des Stellglieds 22 wird derart durch diesen Druck zur rechten Seite bewegt, dass die Kraft des Ansatzpunkts des dritten bzw. vierten Gangs gegenüber dem Ansatzpunkt des fünften bzw. Gangs gewonnen wird, wobei die Steuerstange 31 des Getriebes zum gewählten Register des fünften bzw. sechsten Gangs gebracht wird. Wenn die Steuerstange 31 den erläuterten Ansatzpunkt überwindet, bewirkt sie, dass das im Getriebekasten angeordnete Ventil 24 abgeschaltet wird, wodurch der Druck in der Kammer K3 (vgl. Fig. 5g) folglich abgegeben wird. Hieraus folgt:

Der Hilfskolben 267 wird nun durch den Druck innerhalb der Kammer V5 gegen die linke Seite des Verteilergehäuses 261 gedrückt. Der Schieber 264, der durch die beiden gegenüberliegenden Drücke in den Kammern V5 und V6 ausbalanciert ist, jedoch hinsichtlich der Kraft der Feder 2641 nicht im Gleichgewicht ist, wird gegen den Kolben 267 in seine linke Endlage bewegt. Beide Steuerkolben 262 und 263, die durch ihre jeweiligen Federn 2621 und 2631 gedrückt werden, folgen dem Schieber 264 in seine neue Lage. Der Schalthebel 12 erreicht so seine stabile Schaltstellung am fünften bzw. sechsten Gang, wobei keine weitere Kraft aufgebracht werden muss, um diese Position beizubehalten. Das Ventil 265 wird dazu veranlasst, den Versorgungs-Ventilsitz 2642 wieder zu schließen, und der Druck in der Kammer Z1 wird durch den Abgabe-Ventilsitz 2622 und seine Leitung 2623 zur Atmosphäre belüftet. Zusammen mit der Kammer Z1 wird auch die Wahlstellgliedkammer 225 zur Atmosphäre belüftet und der Kolben 221 wird belastungsfrei, während die Steuerstange 31 in ihrer Hochgeschwindigkeitsbereichs-Grundposition beim fünften bzw. sechsten Gang gehalten wird, mittels den beiden gegenüberliegenden Kräften am Ansatzpunkt des fünften bzw. sechsten Gangs gegenüber dem Ansatzpunkt des dritten bzw. vierten Gangs auf der einen Seite und durch die Feder 38 auf der anderen Seite.

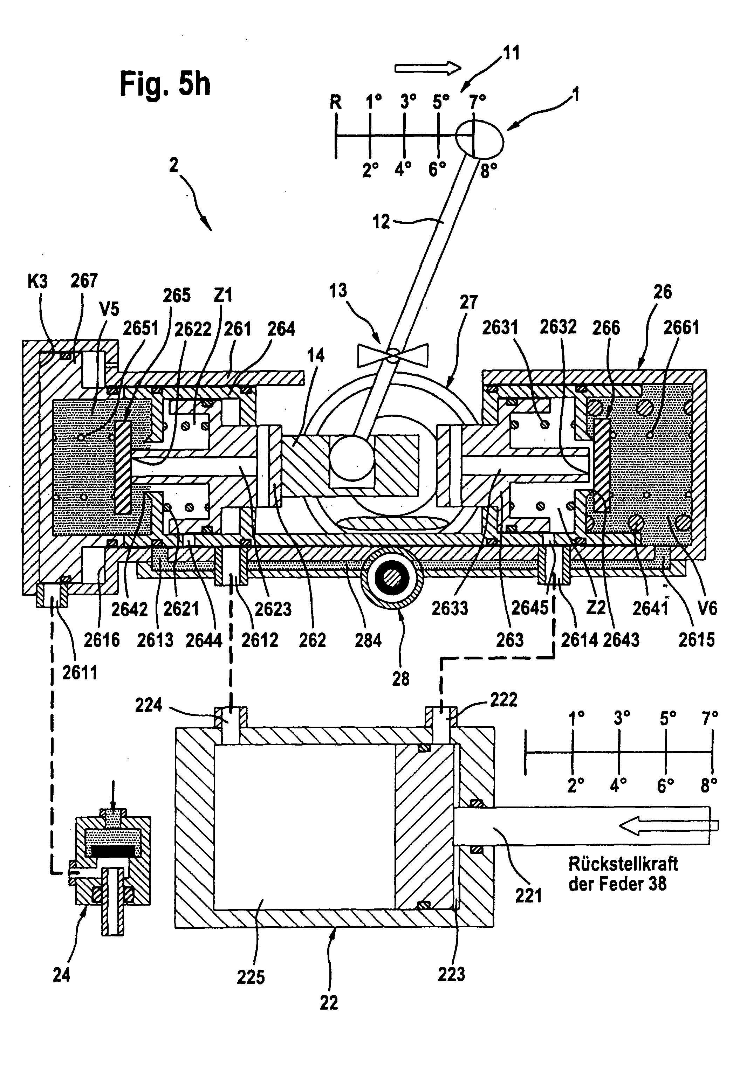

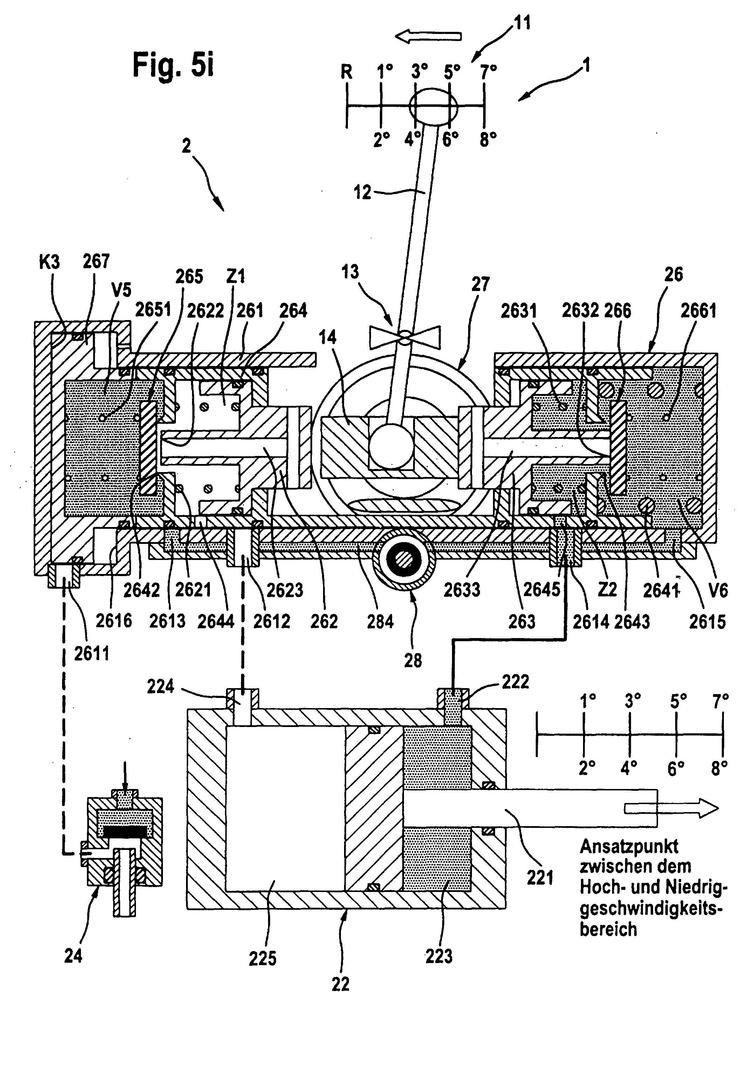

Fig. 5h ist eine Darstellung des Wahlsystems, wenn dieses von der Schaltschiene des fünften bzw. sechsten Gangs zur Schaltschiene des siebten bzw. achten Gangs übertritt. Beginnend von der Position an der Schaltschiene des fünften bzw. sechsten Gangs wird der Schalthebel 12 zur rechten Seite gedrückt, wodurch der Steuerkolben 262 entgegen der Wirkung der Feder 2621 zur linken Seite gedrückt wird, um den Abgabe-Ventilsitz 2622 zu schließen, und um das Ventil 265 am Versorgungs-Ventilsitz 2642 zu öffnen. Der Schieber 264 wird weiterhin durch die Feder 2641 in seiner Position auf der linken Seite gehalten, wobei die linke Fläche des Hilfskolben 267 nicht unter Druck steht.

Der Druck strömt von der Kammer V5 in die Kammer Z1, bis der Wert erreicht ist, der durch die vom Schalthebel 12 ausgeübte Kraft zugelassen wird, geht durch die Anschlüsse 2644 und 2612 und von dort zum Anschluss 224 und zur Kammer 225 des Wahlstellglieds 22. Der Kolben 221 des Stellglieds 22 wird durch diesen Druck so bewegt, dass die Kraft der Feder 38 gewonnen wird, was die Steuerstange 31 des Getriebes zum gewählten Register des siebten bzw. achten Gangs bringt. Der Schalthebel 12 muss in dieser Position gehalten werden, da er ansonsten in die gewählte Grundposition beim fünften bzw. sechsten Gang zurückkehrt. Sobald der Gang in Eingriff ist, sind die Reaktionskräfte auf die der Feder 2621 beschränkt.

Der Übertritt des Wahlsystems von der Schaltschiene des fünften bzw. achten Gangs zur Schaltschiene des fünften bzw. sechsten Gangs muss nicht erläutert werden, da er auf einfache Weise dadurch durchgeführt wird, dass man den Schalthebel 12 freigibt, damit dieser in seine stabile Position beim fünften bzw. sechsten Gang zurückkehrt. Die Bewegung der entsprechenden relevanten Bauelemente kann durch einem Vergleich der Fig. 5h und 5g erkannt werden.

Fig. 5i stellt das Wahlsystem dar, wenn es vom Hochgeschwindigkeitsregister (fünfter bzw. sechster Gang) zum Niedriggeschwindigkeitsregister (dritter bzw. vierter Gang) übergeht.

Beginnend von der Position beim fünften bzw. sechsten Gang, wie sie in Fig. 5g gezeigt ist und durch ein Ziehen am Schalthebel 12 zur linken Seite, wird der Steuerkolben 263 gegen die Feder 2631 zur rechten Seite gedrückt, um seinen Abgabe-Ventilsitz 2632 zu schließen, und das Ventil 266 am Versorgungs-Ventilsitz 2643 zu öffnen. Der Schieber 264 wird weiterhin durch die Feder 2641 auf der rechten Seite in der Position des fünften bzw. sechsten Gangs gegen den Hilfskolben 267 gehalten, der, nachdem die Kammer V5 ohne Druck ist, auf das linke Ende des Gehäuses 261 zuweist.

Der Druck strömt von der Kammer V6 in die Kammer Z2, erreicht dort einen Wert, der der durch den Schalthebel 12 aufgebrachten Kraft entspricht, und tritt durch die Anschlüsse 2645 und 2614 und von dort zum Anschluss 222 und in die Kammer 223 des Wahlstellglieds 22 ein. Der Kolben 221 des Stellglieds 22 wird durch diesen Druck derart zur linken Seite bewegt, dass die Kraft des Ansatzpunkts beim fünften bzw. sechsten Gang gegenüber dem Ansatzpunkts beim dritten bzw. vierten Gang gewonnen wird, was die Steuerstange 31 des Getriebes zum gewählten Register beim dritten bzw. vierten Gang bringt.

Wenn die Steuerstange 31 diesen Ansatzpunkt überwindet, veranlasst sie, dass das innerhalb des Getriebekastens angeordnete Ventil 24 angeschaltet wird, wobei folglich Druck zur Kammer K3 (vgl. Fig. 5a) zugeführt wird. Hieraus folgt:

Der Hilfskolben 267 wird nun durch den Druck innerhalb der Kammer K3 gegen die vorstehende Fläche 2616 des Verteilergehäuses 261 gedrückt. Der Schieber 264, der durch die beiden gegenüberstehenden Drücke in den Kammern V5 und V6 ausbalanciert ist, jedoch durch den Kolben 267 gegen die Feder gedrückt wird, wird in seine zentrale Position bewegt. Beide Steuerkolben 262 und 263 folgen dem Schieber 264 in ihre zentrale Positionen, da sie durch ihre jeweiligen Federn 2621 und 2631 gedrückt werden. Der Schalthebel 12 erreicht wiederum seine stabile Schaltposition beim dritten bzw. vierten Gang, wobei nun keine Kraft mehr aufgebracht werden muss, um diese Position zu halten. Das Ventil 266 wird veranlasst, den Versorgungs-Ventilsitz 2643 wieder zu schließen, und der Druck in der Kammer Z2 wird durch den Abgabe-Ventilsitz 2632 und seine Leitung 2633 zur Atmosphäre belüftet. Zusammen mit der Kammer Z2 wird auch die Wahlstellgliedkammer 223 zur Atmosphäre belüftet und der Kolben 221 wird lastfrei. Währenddessen wird die Steuerstange 31 in ihrer Niedriggeschwindigkeitsbereichs-Grundposition beim dritten bzw. vierten Gang durch die beiden einander entgegenwirkenden Kräfte des Ansatzpunkts (dritter bzw. vierter Gang gegenüber fünfter bzw. sechster Gang) auf einer Seite und durch die Feder 37 auf der anderen Seite gehalten.

### Bezugszeichenliste

- 1: Schalthebeleinrichtung
- 2: Übertragungseinrichtung
- 3: Schalteinrichtung
- 11: Register
- 12: Schalthebel
- 13: Schwenkkugellager
- 14: Gleitkreuz
- 15: Stellglied
- 16: Stellglied
- 17: Druckluftspeicher
- 18: Ventil
- 19: Stellglied
- 20: Wahlverteiler
- 21: Eingriffsverteiler
- 22: Schaltventil
- 23: Steuerstange
- 24: Schaltgabel
- 25: Verbindungsstange
- 26: Kurvenbahn
- 27: Feder
- 28: Anker
- 29: Feder
- 30: Feder
- 31: Sitz
- 32: Kolben
- 33: Schaltventil
- 34: Schaltventil
- 35: Stellgliedanschluss
- 36: Stellgliedanschluss
- 37: Anker
- 38: Ventil
- 39: Kammer
- 40: Abgabeanschluss
- 221: Kolben
- 222: Anschluss
- 223: Kammer
- 224: Anschluss
- 225: Kammer
- 226: Gehäuse
- 227: Steuerkolben
- 228: Steuerkolben
- 229: Schieber
- 230: Ventil
- 231: Ventil
- 232: Hilfskolben
- 233: Gehäuse
- 234: Steuerkolben
- 235: Steuerkolben
- 236: Schieber
- 237: Ventil
- 238: Ventil
- 239: Anschluss
- 240: Anschluss
- 241: Abstandsring
- 242: Weg
- 243: Ventilsitz
- 244: Ventilsitz
- 245: Anschluss
- 246: Anschluss
- 247: Anschluss
- 248: Anschluss
- 249: Anschluss
- 250: vorstehende Fläche
- 251: Feder
- 252: Abgabe-Ventilsitz
- 253: Abgabeanschluss
- 254: Feder
- 255: Abgabe-Ventilsitz
- 256: Abgabeanschluss
- 257: Feder
- 258: Ventilsitz
- 259: Ventilsitz
- 260: Öffnung
- 261: Öffnung
- 262: Feder
- 263: Feder
- 264: Anschluss
- 265: Anschluss
- 266: Anschluss
- 267: Anschluss
- 268: Feder
- 269: Abgabe-Ventilsitz
- 270: Abgabeanschluss
- 271: Feder
- 272: Abgabe-Ventilsitz
- 273: Abgabeanschluss
- 274: Feder
- 275: Halter
- 276: Feder
- 277: Halter
- 278: Ventilsitz
- 279: Ventilsitz
- 280: Öffnung
- 281: Öffnung
- 282: Feder
- 2761: Feder
- V1: Versorgungskammer
- V2: Versorgungskammer
- V3: Versorgungskammer
- V4: Versorgungskammer
- V5: Versorgungskammer
- V6: Versorgungskammer
- K1: Kammer
- K2: Kammer
- K3: Kammer
- Z1: Zuführkammer
- Z2: Zuführkammer

## Patentansprüche

1. Schaltgetriebe für ein Fahrzeug, insbesondere für ein Nutzfahrzeug, mit:
einer Schalthebeleinrichtung (1),
einer Übertragungseinrichtung (2),
einer Schalteinrichtung (3), und
einem Getriebe,
wobei die Übertragungseinrichtung (2) versehen ist mit:
einem Wahlverteiler (26), der eine mechanische Einwirkung entsprechend der Stellung eines Schalthebels (12) der Schalthebeleinrichtung (1) in ein pneumatisches Signal umwandelt, und
einem doppelt wirkenden pneumatischen Stellglied (22), welches das pneumatische Signal des Wahlverteilers (26) in eine mechanische Ansteuerung der Schalteinrichtung (3) übersetzt und dadurch die Schalteinrichtung (3) im Ansprechen auf die Schalthebeleinrichtung (1) pneumatisch betätigt, und wobei die Schalteinrichtung (3) einen dementsprechenden Getriebebereich ansteuert wobei, der Wahlverteiler (26) versehen ist mit:
einem Gehäuse (261),
einem im Gehäuse geführten Schieber (264),
aufeinander zu gerichteten Steuerkolben (262, 263), die im Schieber (264) verschiebbar geführt und jeweils mittels einer Feder (2621, 2631) in eine Richtung aufeinander zu vorgespannt sind, und
Ventilen (265, 266), die jeweils federnd gegen einen Ventilsitz (2642, 2643) am Schieber (264) vorgespannt sind,
wobei die Ventile (265, 266) und die voneinander körperfernen Enden der Steuerkolben (262, 263) jeweils eine Ventileinrichtung bilden, und
wobei ein Ende des Schiebers (264) mit einem Kolben (267) zusammenwirkt,
wobei der Schieber (264), ein Ventil (265, 266) und der Kolben (267) bzw. das
Gehäuse (261) jeweils einen ersten Druckraum (V5, V6) ausbilden, und
wobei der Schieber (264), ein Steuerkolben (262, 263) und ein Ventil (265, 266) jeweils einen zweiten Druckraum (Z1, Z2) ausbilden.

2. Schaltgetriebe für ein Fahrzeug, insbesondere für ein Nutzfahrzeug, mit:
einer Schalthebeleinrichtung (1),
einer Übertragungseinrichtung (2),
einer Schalteinrichtung (3), und
einem Getriebe,
wobei die Übertragungseinrichtung (2) versehen ist mit:
einem Eingriffsverteiler (27), der eine mechanische Einwirkung entsprechend der Stellung eines Schalthebels (12) der Schalthebeleinrichtung (1) in ein pneumatisches Signal umwandelt, und
einem doppelt wirkenden pneumatischen Stellglied (21), welches das pneumatische Signal des Eingriffsverteilers (27) in eine mechanische Ansteuerung der Schalteinrichtung (3) übersetzt und dadurch die Schalteinrichtung (3) im Ansprechen auf die Schalthebeleinrichtung (1) pneumatisch betätigt, und wobei die Schalteinrichtung (3) einen dementsprechenden Getriebebereich ansteuert wobei, der Eingriffsverteiler (27) versehen ist mit:
einem Gehäuse (271),
einem im Gehäuse (271) geführten Schieber (274),
aufeinander zu gerichteten Steuerkolben (272, 273), die im Schieber (274) verschiebbar geführt und jeweils mittels einer Feder (2721, 2731) in eine Richtung aufeinander zu vorgespannt sind, und
Ventilen (275, 276), die jeweils federnd gegen einen Ventilsitz (2745, 2746) am Schieber (274) vorgespannt sind,
wobei die Ventile (275, 276) und die voneinander körperfernen Enden der Steuerkolben (272, 273) jeweils eine Ventileinrichtung bilden,
wobei der Schieber (274), ein Ventil (275, 276) und das Gehäuse (271) jeweils einen ersten Druckraum (V1, V2) ausbilden, und
wobei der Schieber (274), ein Steuerkolben (272, 273) und ein Ventil (275, 276) jeweils einen zweiten Druckraum (V3, V4) ausbilden,
wobei das Stellglied (21) mit zwei Schaltventilen (212, 213) versehen ist, welche jeweils nur dann abgeschaltet werden, wenn ein Kolben (211) des Stellglieds (21) in einer jeweiligen Endlage ist.

3. Pneumatischer Wahlverteiler (26) geeignet für ein Schaltgetriebe mit:
einem Gehäuse (261),
einem im Gehäuse geführten Schieber (264),
aufeinander zu gerichteten Steuerkolben (262, 263), die im Schieber (264) verschiebbar geführt und jeweils mittels einer Feder (2621, 2631) in eine Richtung aufeinander zu vorgespannt sind, und
Ventilen (265, 266), die jeweils federnd gegen einen Ventilsitz (2642, 2643) am Schieber (264) vorgespannt sind,
wobei die Ventile (265, 266) und die voneinander körperfernen Enden der Steuerkolben (262, 263) jeweils eine Ventileinrichtung bilden, und
wobei ein Ende des Schiebers (264) mit einem Kolben (267) zusammenwirkt,
wobei der Schieber (264), ein Ventil (265, 266) und der Kolben (267) bzw. das Gehäuse (261) jeweils einen ersten Druckraum (V5, V6) ausbilden, und
wobei der Schieber (264), ein Steuerkolben (262, 263) und ein Ventil (265, 266) jeweils einen zweiten Druckraum (Z1, Z2) ausbilden.

4. Pneumatischer Eingriffsverteiler (27) geeignet für ein Schaltgetriebe mit:
einem Gehäuse (271),
einem im Gehäuse (271) geführten Schieber (274),
aufeinander zu gerichteten Steuerkolben (272, 273), die im Schieber (274) verschiebbar geführt und jeweils mittels einer Feder (2721, 2731) in eine Richtung aufeinander zu vorgespannt sind, und
Ventilen (275, 276), die jeweils federnd gegen einen Ventilsitz (2745, 2746) am Schieber (274) vorgespannt sind,
wobei die Ventile (275, 276) und die voneinander körperfernen Enden der Steuerkolben (272, 273) jeweils eine Ventileinrichtung bilden,
wobei der Schieber (274), ein Ventil (275, 276) und das Gehäuse (271) jeweils einen ersten Druckraum (V1, V2) ausbilden, und
wobei der Schieber (274), ein Steuerkolben (272, 273) und ein Ventil (275, 276) jeweils einen zweiten Druckraum (V3, V4) ausbilden.

## Claims

1. Switching gear for a vehicle, in particular for a heavy-duty vehicle, comprising:
a switching lever means (1 ),
a transmission means (2),
a switching means (3), and
a gearbox,
wherein said transmission means (2) is provided with:
a selection distributor (26) that converts a mechanical action into a pneumatic signal in correspondence with the position of a switching lever (12) of said switching lever means (1), and
a dual-action pneumatic actuator (22), which converts the pneumatic signal from said selection distributor (26) into a mechanical control action on said switching means (3) and hence pneumatically operates said switching means (3) in response to said switching lever means (1), with said switching means (3) controlling a corresponding gear section, wherein said selection distributor (26) is provided with:
a housing (261),
a slide (264) guided in said housing,
control plungers (262, 263) guided for displacement in said slide (264), which are each biased by means of a spring (2621, 2631) in a direction towards each other, and
valves (265, 266) that are each resiliently biased against a valve seat (2642, 2643) in a direction towards each other,
with said valves (265, 266) and the ends of said control plungers (262, 263), which are distal from each other, constituting a respective valve means, and
with one end of said slide (264) cooperating with a plunger (267),
with said slide (264), one valve (265, 266) and said plunger (267) or said housing (261), respectively, forming a respective first pressure space (V5, V6), and
with said slide (264), one control plunger (262, 263) and one valve (265, 266) constituting a respective second pressure space (Z1, Z2).

2. Switching gear for a vehicle, in particular for a heavy-duty vehicle, comprising:
a switching lever means (1),
a transmission means (2),
a switching means (3), and
a gearbox,
wherein said transmission means (2) is provided with:
an engagement distributor (27) that converts a mechanical action into a pneumatic signal in correspondence with the position of a switching lever (12) of said switching lever means (1), and
a dual-action pneumatic actuator (21), which converts the pneumatic signal from said engagement distributor (27) into a mechanical control action on said switching means (3) and hence pneumatically operates said switching means (3) in response to said switching lever means (1), with said switching means (3) controlling a corresponding gear section, wherein said engagement distributor (27) is provided with:
a housing (271),
a slide (274) guided in said housing (271)
control plungers (272, 273) guided for displacement in said slide (274), which are each biased by means of a spring (2721, 2731) in a direction towards each other, and
valves (275, 276) that are each resiliently biased against a valve seat (2745, 2746) in a direction towards each other,
with said valves (275, 276) and the ends of said control plungers (272, 273), which are distal from each other, constituting a respective valve means,
with said slide (274), one valve (275, 276) and said housing (271) forming a respective first pressure space (V1, V2), and
with said slide (274), one control plunger (272, 273) and one valve (275, 276) constituting a respective second pressure space (V3, V4),
wherein said actuator (21) is provided with two switching valves (212, 213) that are each switched off only when one plunger (211) of said actuator (21) is located in a respective terminal position.

3. Pneumatic selection distributor (26) suitable for a switching gear, comprising:
a housing (261),
a slide (264) guided in said housing,
control plungers (262, 263) oriented towards each other, which are guided for displacement in said slide (264) and which are each biased by means of a spring (2621, 2631) in a direction towards each other, and
valves (265, 266) that are each biased resiliently against a valve seat (2652, 2643) on said slide (264),
with said valves (265, 266) and the ends of said control plungers (262, 263), which are distal from each other, forming a respective valve means, and
with one end of said slide (264) cooperating with a plunger (267),
with said slide (264, one valve (265, 266) and said plunger (267) or said housing (261) forming a respective first pressure space (V5, V6), and
with said slide (264), one control piston (262, 263) and one valve (265, 266) constituting a respective second pressure space (Z1, Z2).

4. Pneumatic engagement distributor (27) suitable for a switching gear, comprising:
a housing (271 ),
a slide (274) guided in said housing (271),
control plungers (272, 273) directed towards each other, which are guided for displacement in said slide (274) and which are each biased by means of a spring (2721, 2731) in a direction towards each other, and
valves (275, 276), which are each, biased resiliently against a valve seat (2745, 2746) on said slide (274),
with said valves (275, 276) and the ends of said control plungers (272, 273) distal from each other cooperate to form a respective valve means,
with said slide (274), one valve (275, 276) and said housing (271) forming a respective first pressure space (V1, V2), and
with said slide (274), one control plunger (272, 273) and one valve (275, 276) constituting a respective second pressure space (V3, V4).

## Revendications

1. Transmission à changement de vitesse pour un véhicule, en particulier pour un véhicule utilitaire, comprenant :
un moyen à levier de vitesse (1),
un moyen de transmission (2),
un moyen de changement (3), et
une boîte de vitesses,
dans lequel ledit moyen de transmission (2) est muni des éléments suivants :
un distributeur de sélection (26), qui convertit une action mécanique en un signal pneumatique en correspondance avec la position d'un levier de vitesse (12) dudit moyen à levier de vitesse (1), et
un a actionneur pneumatique à double effet (22), qui convertit le signal pneumatique provenant dudit distributeur de sélection (26) en une commande mécanique agissant sur ledit moyen de changement (3) et qui agit ainsi, de façon pneumatique, sur ledit moyen de changement (3) en réponse audit moyen à levier de vitesse (1), audit moyen de changement (3) commandant une gamme de transmission correspondante, dans lequel ledit distributeur de sélection (26) est muni des éléments suivants :
un carter (261),
un coulisseau (264) guidé dans ledit carter,
des pistons pilotes (262, 263) guidés à déplacement dans ledit coulisseau (264), dont chacun est mis en précontrainte moyennant un ressort (2621, 2631) en un sens l'un vers l'autre, et
des soupapes (265, 266), dont chacune est mise en précontrainte, de façon élastique, contre une siège de soupape (2642, 2643) en un sens l'un vers l'autre, auxdites soupapes (265, 266) et aux extrémités desdits pistons pilotes (262, 263), qui sont distales l'une de l'autre, constituant un moyen à soupapes respectif, et
à une extrémité dudit coulisseau (264) coopérant avec un piston (267), audit coulisseau (264), à une soupape (265, 266) et audit piston (267) ou respectivement audit carter (261) formant un premier espace respectif sous pression (V5, V6), et
audit coulisseau (264), à un piston pilote (262, 263) et à une soupape (265, 266) constituant un deuxième espace respectif sous pression (Z1, Z2).

2. Transmission à changement de vitesse pour un véhicule, en particulier pour un véhicule utilitaire, comprenant :
un moyen à levier de vitesse (1 ),
un moyen de transmission (2),
un moyen de changement (3), et
une boîte de vitesses,
dans lequel ledit moyen de transmission (2) est muni des éléments suivants :
an distributeur d'engrènement (27) qui convertit une action mécanique en un signal pneumatique en correspondance avec la position d'un levier de vitesse (12) dudit moyen à levier de vitesse (1), et
un actionneur pneumatique à double effet (21), qui convertit le signal pneumatique provenant dudit distributeur d'engrènement (27) en une commande mécanique agissant sur ledit moyen de changement (3) et actionne ainsi, de façon pneumatique, ledit moyen de changement (3) en réponse audit moyen à levier de vitesse (1), audit moyen de changement (3) commandant une gamme de vitesses correspondante, dans lequel ledit distributeur d'engrènement (27) est muni des éléments suivants :
un carter (271 ),
un coulisseau (274) guidé dans ledit carter (271)
des pistons pilotes (272, 273) guidés à déplacement dans ledit coulisseau (274), dont chacun est mis en précontrainte moyennant un ressort (2721, 2731 ) en un sens l'un vers l'autre, et
des soupapes (275, 276), dont chacune est mise en précontrainte, de façon élastique, contre une siège de soupape (2745, 2746) en un sens l'un vers l'autre, auxdites soupapes (275, 276) et les extrémités desdits pistons pilotes (272, 273), qui sont distales l'une de l'autre, constituant un moyen à soupapes respectif,
audit coulisseau (274), à une soupape (275, 276) et audit carter (271) formant un premier espace respectif sous pression (V1, V2), et
audit coulisseau (274), à un pistons pilote (272, 273) et à une soupape (275, 276) constituant un deuxième espace respectif sous pression (V3, V4),
dans lequel ledit actionneur (21) est pourvu de deux relais pneumatiques (212, 213), dont chacun n'est mis hors circuit que quand un piston (211) dudit actionneur (21) se trouve en une position terminale respective.

3. Distributeur de sélection pneumatique (26) approprié à une transmission à changement de vitesse, comprenant :
un carter (261),
un coulisseau (264) guidé dans ledit carter,
des pistons pilotes (262, 263) orientés l'un vers l'autre, qui sont guidés à déplacement dans ledit coulisseau (264) et dont chacun est mis en précontrainte moyennant un ressort (2621, 2631) en un sens l'un vers l'autre, et
des soupapes (265, 266), dont chacune est mise en précontrainte, de manière élastique, contre une siège de soupape (2652, 2643) audit coulisseau (264),
auxdites soupapes (265, 266) et aux extrémités desdits pistons pilotes (262, 263), qui sont distales l'une de l'autre, formant un moyen à soupapes respectif, et
à une extrémité dudit coulisseau (264) coopérant avec un piston (267),
audit coulisseau (264, à une soupape (265, 266) et audit piston (267) ou respectivement audit carter (261) formant un premier espace respectif sous pression (V5, V6), et
audit coulisseau (264), à un piston pilote (262, 263) et à une soupape (265, 266) constituant un deuxième espace respectif sous pression (Z1, Z2).

4. Distributeur d'engrènement pneumatique (27) approprié à une transmission à changement de vitesse, comprenant :
un carter (271),
un coulisseau (274) guidé dans ledit carter (271),
des pistons pilotes (272, 273) orientés l'un vers l'autre, qui sont guidés à déplacement dans ledit coulisseau (274) et dont chacun est mis en précontrainte moyennant un ressort (2721, 2731) en un sens l'un vers l'autre, et
des soupapes (275, 276), dont chacune est mise en précontrainte, de façon élastique, contre une siège de soupape (2745, 2746) audit coulisseau (274),
auxdites soupapes (275, 276) et aux extrémités desdits pistons pilotes (272, 273) distales l'une de l'autre coopérant en formant un moyen à soupapes respectif,
audit coulisseau (274), à une soupape (275, 276) et audit carter (271) formant un premier espace respectif sous pression (V1, V2), et
audit coulisseau (274), à un piston pilote (272, 273) et à une soupape (275, 276) constituant un deuxième espace respectif sous pression (V3, V4).
